(19) Europäisches Patentamt / European Patent Office / Office européen des brevets

(11) EP 2 456 797 B1

(12) # EUROPÄISCHE PATENTSCHRIFT

(45) Veröffentlichungstag und Bekanntmachung des Hinweises auf die Patenterteilung:
**11.09.2013 Patentblatt 2013/37**

(21) Anmeldenummer: **10736664.3**

(22) Anmeldetag: **19.07.2010**

(51) Int Cl.:
***C08F 265/10*** (2006.01) ***C09D 151/00*** (2006.01)

(86) Internationale Anmeldenummer:
**PCT/EP2010/060429**

(87) Internationale Veröffentlichungsnummer:
**WO 2011/009838 (27.01.2011 Gazette 2011/04)**

(54) **WÄSSRIGE POLYMERISATDISPERSION UND DEREN VERWENDUNG ALS BINDEMITTEL FÜR DIE BESCHICHTUNG VON UNTERGRÜNDEN**

AQUEOUS POLYMER DISPERSION AND USE THEREOF AS BINDER FOR COATING SUBSTRATES

DISPERSION DE POLYMÉRISAT AQUEUSE ET UTILISATION COMME LIANT POUR LE REVÊTEMENT DE SUBJECTILES

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**

(30) Priorität: **22.07.2009 EP 09166119**

(43) Veröffentlichungstag der Anmeldung:
**30.05.2012 Patentblatt 2012/22**

(73) Patentinhaber: **BASF SE**
**67056 Ludwigshafen (DE)**

(72) Erfinder:
- **BALK, Roelof**
  **67459 Böhl-Iggelheim (DE)**
- **TIARKS, Franca**
  **Shanghai**
  **Pudong 200122 (CN)**
- **TUCHBREITER, Arno**
  **67056 Ludwigshafen (DE)**

(56) Entgegenhaltungen:
**WO-A1-2008/152017**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 456 797 B1

## Beschreibung

Gegenstand der vorliegenden Erfindung sind wässrige feinteilige Polymerisatdispersionen, die bei niedrigen Temperaturen Film bildend sind, eine gute Blockfestigkeit in einer Formulierung, auch bei erhöhten Temperaturen, aufweisen und eine geringe Schaumneigung zeigen, Verfahren zu deren Herstellung sowie deren Verwendung als Bindemittel für die Beschichtung von Untergründen.

Wässrige Polymerisatdispersionen sind allgemein bekannt. Es handelt sich dabei um fluide Systeme, die als disperse Phase in wässrigem Dispergiermedium aus mehreren ineinander verschlungenen Polymerisatketten bestehenden Polymerisatknäuel, die sogenannte Polymermatrix oder Polymerisatpartikel, in disperser Verteilung befindlich enthalten. Der mittlere Durchmesser der Polymerisatpartikel liegt häufig im Bereich von 10 bis 1000 nm, insbesondere im Bereich von 30 bis 300 nm. Wässrige Polymerisatdispersionen werden in einer Vielzahl von technischen Anwendungen als Bindemittel eingesetzt.

Werden sie als Bindemittel für Beschichtungen von Untergründen eingesetzt ist eine der wichtigen Anforderungen für solche Beschichtungen, dass sie eine gewisse Härte besitzen und damit eine gute Kratz- und Blockfestigkeit aufweisen. Aus ökologischen Gründen wird eine Verfilmung des Bindemittels im Bereich von 0 bis 40°C angestrebt, so dass keine oder nur geringe Mengen eines Filmbildehilfsmittels benötigt werden. Eine andere Anforderung ist eine hohe Feinteiligkeit. Dieses ermöglicht die Herstellung von transparenten wässrigen Lasuren und ein gutes Eindringen der Lasur in den Untergrund, insbesondere wenn das zu beschichtende Substrat Holz ist.

Aus EP-B 0 710 680 ist bekannt, dass man durch mehrstufige Emulsionspolymerisation Polymerisatdispersionen herstellen kann, die eine niedrige Mindestfilmbildetemperatur (MFT) aufweisen und Filme mit hoher Blockfestigkeit bilden. Solche Polymerisatdispersionen haben einen mittleren Polymerisatpartikeldurchmesser von < 100 nm. Die Feinteiligkeit reicht allerdings in den meisten Fällen nicht aus, um damit im nassen Zustand gewünschte transparente Lasuren für Holzbeschichtungen zu formulieren. Holzlasuren sind im trockenen Zustand transparente oder semitransparente Holzbeschichtungen. Sie enthalten transparente Pigmente (z.B. transparentes, ultrafeines Eisenoxid) in so geringer Menge, dass man die Struktur des Holzes noch erkennen kann.

Soll die Teilchengröße der mittels der radikalisch initiierten wässrigen Emulsionspolymerisation herzustellenden Polymerisatteilchen gezielt eingestellt werden, so wird in der Regel eine sogenannte Polymersaat eingesetzt, welche entweder vorher mit anderen Monomeren separat hergestellt wurde (Polymerfremdsaat) oder welche durch Teilpolymerisation der zu polymerisierenden Monomere "in situ" erzeugt wurden. Insbesondere bei der Herstellung von feinteiligen Polymerisatdispersionen verwendet man bevorzugt diese "in situ" Polymersaat.

Die Herstellung einer wässrigen Polymerisatdispersion unter Verwendung einer "in situ" Polymersaat ist dem Fachmann geläufig (siehe beispielsweise DE-A 196 09 509, EP-A 690882, EP-A 710 680, EP-A 1 125 949, EP-A 1 294 816, EP-A 1 614 732, WO-A 03/29300) und erfolgt in der Regel dergestalt, dass vorab der eigentlichen Emulsionspolymerisation eine kleine Teilmenge, des zur Emulsionspolymerisation eingesetzten Monomerengemisches im wässrigen Polymerisationsmedium vorgelegt und in Anwesenheit einer größeren Emulgatormenge radikalisch polymerisiert wird. Falls insbesondere feinteilige Polymerisatdispersionen benötigt sind, braucht man eine besonders große Emulgatormenge. Die dadurch sehr emulgatorreichen Polymerisatdispersionen neigen zu starker Schaumbildung.

Aufgabe der vorliegenden Erfindung war es daher, ein Bindemittel in Form einer wässrigen feinteiligen Polymerisatdispersion, mit einer mittleren Partikelgröße von ≤60nm, mit niedriger Emulgatormenge (< 2 Gewichtsteile pro 100 Gewichtsteile Gesamtmenge Monomere), niedriger MFT, im Bereich von 0 - 20°C, und guter Blockfestigkeit herzustellen. Mit diesen Polymerisatdispersionen sollte es möglich sein, im nassen Zustand transparente Lasuren herzustellen.

Überraschender Weise wurde die Aufgabe gelöst, durch wässrige Polymerisatdispersionen erhältlich durch zuerst die Herstellung einer "in situ" Saat, enthaltend hydrophile und hydrophobe Monomere, indem in einem wässrigen Polymerisationsmedium zuerst lediglich

0,1 bis 10 Gew.-% der Gesamtmenge des wenigstens einen Monomeren A und / oder B sowie
0,1 bis 10 Gew.-% eines hydrophilen Monomers mit der allgemeinen Formel

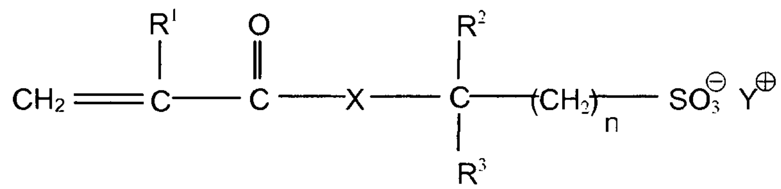

in der die Variablen folgende Bedeutung haben:

| | |
|---|---|
| n = | 0 bis 2 |
| $R^1$, $R^2$, $R^3$ = | unabhängig von einander Wasserstoff oder eine Mehtylgruppe |
| X = | Sauerstoff oder die Iminogruppe (NH), und |
| Y = | Wasserstoff, Alkalimetall oder Ammonium |

vorgelegt (Monomerzusammensetzung I), und in Gegenwart von mindestens einem Emulgator und einem Radikalinitiator polymerisiert werden (Polymerisationsstufe 1), worauf ein Copolymerisat mit einer Monomerzusammensetzung II (Polymerisationsstufe 2) enthaltend

| | |
|---|---|
| 40 - 60 Gew.-% | Monomere A, deren Homopolymerisate eine Glasübergangstemperatur unter 20°C besitzen |
| 15 - 30 Gew.-% | Monomere B, deren Homopolymerisate eine Glasübergangstemperatur über 50°C besitzen |
| 0,1 - 5 Gew.-% | mit Monomeren B copolymerisierbare α,β-ungesättigte Carbon-, Sulfon-, Phosphonsäuren und/ oder Carbonsäureamide [Monomere C] |
| 0 - 5 Gew.-% | Ketogruppen enthaltende ethylenisch ungesättigte Monomere und/oder von C verschiedene ethylenisch ungesättigte und Stickstoff enthaltende Haftmonomere [Monomere D] |
| 0 - 5 Gew.-% | sonstige ethylenisch ungesättigte Monomeren E |

und in einer dritten Polymerisationsstufe ein Copolymerisat mit einer Monomerzusammensetzung III polymerisiert wird, enthaltend

| | |
|---|---|
| 0 - 5 Gew.-% | Monomere A, deren Homopolymerisate eine Glasübergangstemperatur unter 20°C besitzen |
| 10 - 30 Gew.-% | Monomere B, deren Homopolymerisate eine Glasüberganstemperatur über 50°C besitzen |
| 0,1 - 5 Gew.-% | mit Monomeren B copolymerisierbare α,β-ungesättigte Carbon-, Sulfon- oder Phosphonsäuren und/oder Carbonsäureamide [Monomere C] |
| 0 - 5 Gew.-% | Ketogruppen enthaltende ethylenisch ungesättigte Monomere und/oder von C verschiedene ethylenisch ungesättigte und Stickstoff enthaltende Haftmonomere [Monomere D] |
| 0 - 5 Gew.-% | sonstige ethylenisch ungesättigte Monomere E. |

wobei die Summe der Monomerzusammensetzungen I + II + III jeweils 100% beträgt.

Gegenstand der vorliegenden Erfindung ist ebenfalls ein Verfahren zur Herstellung der wässrigen Polymerisatdispersion, sowie deren Verwendung als Bindemittel für Beschichtungen von Untergründen, insbesondere deren Verwendung in Anstrichmitteln, insbesondere für Holzbeschichtungen, sowie die aus diesen wässrigen Polymerisatdispersionen zugänglichen Polymerisatpulver, sowie Beschichtungsmittel enthaltend die wässrige Polymerisatdispersion.

Mit der Glastemperatur Tg ist der Grenzwert der Glasübergangstemperatur gemeint, dem diese gemäß G. Kanig (Kolloid-Zeitschrift & Zeitschrift für Polymere, Bd. 190, S. 1, Gleichung 1) mit zunehmendem Molekulargewicht zustrebt; sie wird nach dem DSC-Verfahren ermittelt (Differential Scanning Calorimetry, 20 K/min, midpoint).

Nach Fox (T.G. Fox, Bull. Am. Phys. Soc. 1956 [Ser. II] 1, Seite 123 und gemäß Ullmann's Encyclopädie der technischen Chemie, Bd. 19, Seite 18, 4. Auflage, Verlag Chemie, Weinheim, 1980) gilt für die Glasübergangstemperatur von höchstens schwach vernetzten Mischpolymerisaten in guter Näherung:

$$1/T_g = x^1/T_g^1 + x^2/T_g^2 + \ldots.\ x^n/T_g^n,$$

wobei $x^1$, $x^2$, .... $x^n$ die Massenbrüche der Monomeren 1, 2, .... n und $T_g^1$, $T_g^2$, .... $T_g^n$ die Glasübergangstemperaturen der jeweils nur aus einem der Monomeren 1, 2, .... n aufgebauten Polymerisaten in Grad Kelvin bedeuten. Die $T_g$-Werte für die Homopolymerisate der meisten Monomere sind bekannt und z.B. in Ullmann's Ecyclopedia of Industrial Chemistry, Bd. 5, Vol. A21, Seite 169, VCH Weinheim, 1992, aufgeführt; weitere Quellen für Glasübergangstemperaturen von Homopolymerisaten bilden z.B. J. Brandrup, E.H. Immergut, Polymer Handbook, 1st Ed., J. Wiley, New York 1966, 2nd Ed. J.Wiley, New York 1975, und 3rd Ed. J. Wiley, New York 1989).

Geeignete Monomere A) sind beispielsweise verzweigte und unverzweigte ethylenisch ungesättigte $C_3$- $C_{10}$-Olefine, $C_1$- $C_{10}$- Alkylacrylate, $C_5$- $C_{10}$- Alkylmethacrylate, $C_5$- $C_{10}$- Cycloalkyl (meth) acrylate, $C_1$- $C_{10}$- Dialkylmaleinate und/ oder $C_1$- $C_{10}$- Dialkylfumarate.

Bevorzugt werden solche Monomere A) verwendet, deren Homopolymerisate Glasübergangstemperaturen unterhalb 0°C aufweisen.

Insbesonders bevorzugt werden als Monomere A) Ethylacrylat, n-Propylacrylat, n-Butylacrylat, Isobutylacrylat, sec-Butylacrylat, n-Hexylacrylat, 2-Ethylhexylacrylat, n-Hexylmethacrylat, 2-Ethylhexylmethacrylat oder 2-Propylheptylacrylat eingesetzt.

Die Homopolymerisate der Monomere B) haben eine Glasübergangstemperatur > 50° und bevorzugt > 80°. Eingesetzt werden beispielsweise Styrol, α- Methylstyrol, o- oder p- Vinyltoluol, Vinylchlorid, Vinylidenchlorid, Acrylnitril, Methacrylnitril, sowie ($C_1$- $C_4$)- Alkylester oder- Cycloalkylester der Methacrylsäure, beispielsweise Methylmethacrylat, Cyclohexylmethacrylat, Isobornylmethacrylat und tert.- Butylmethacrylat.

Die erfindungsgemäßen Bindemittelpolymerisate können als Monomere C) ethylenisch ungesättigte Monomere, die anionische Gruppen bilden können enthalten. Bei diesen Gruppen handelt es sich vorzugsweise um Carboxylat-, Phosphonat- oder Sulfonatgruppen.

Bevorzugte Monomere C) sind monoethylenisch ungesättigte Alkyl- oder Arylsulfonsäuren wie Vinylsulfonsäure, Methallylsulfonsäure, Vinylbenzolsulfonsäure, Acrylamidoethansulfonsäure, Acrylamidopropansulfonsäure, 2- Sulfoethyl (meth) acrylat, Sulfopropyl (meth) acrylat , monoethylenisch ungesättigte Phosphon- und Sulfonsäuren, z. B. Vinylphosphonsäure und Allylphosphonsäure, Vinylsulfonsäure, Allylsulfonsäure, Sulfoethylacrylat, Sulfoethylmethacrylat, Sulfopropylacrylat, Sulfopropylmethacrylat, 2- Hydroxy- 3- acryloxypropylsulfonsäure, 2- Hydroxy- 3- methacryloxypropylsulfonsäure, Styrolsulfonsäuren und 2- Acrylamido- 2- methylpropansulfonsäure, Styrolsulfonsäuren und deren Derivate, wie etwa Styrol- 4- sulfonsäure und Styrol- 3- sulfonsäure, sowie die Salze, insbesondere die Erdalkali- oder Alkalimetallsalze der vorgenannten Säuren, wie etwa Natrium- styrol- 3- sulfonat und Natrium- styrol=4- sulfonat, sowie α, β- ungesättigte $C_3$- $C_6$- Carbonsäuren, α, β- ungesättigte $C_4$- $C_8$- Dicarbonsäuren oder deren Anhydride wie Acrylsäure, Methacrylsäure, Crotonsäure, Fumarsäure, Maleinsäure, Maleinsäureanhydrid, Itaconsäure und Itaconsäureanhydrid sowie die Alkalimetall- oder Ammoniumsalze der genannten Monomere, insbesondere deren Natriumsalze.

Desweiteren können als Monomere C) die Amide und die Hydroxyalkylester der α, β- ungesättigten $C_3$- $C_6$- Carbonsäuren, besonders bevorzugt Acrylamid, Methacrylamid, 2- Hydroxyethylacrylat, 2- Hydroxyethylmethacrylat, 2- Hydroxypropyl (meth) acrylat oder 1, 4- Butandiolmonoacrylat eingesetzt werden. Die Monomere C) können einzeln oder auch in Kombinationen von z.B. Säuren und Amiden eingesetzt werden.

Geeignete Monomere D) sind N- Vinylpyrolidon, N- (2- Methacryloyloxyethyl) ethylenharnstoff, N- (2- Acryloyloxyethyl)- ethylenharnstoff, 2- Acetoacetoxyethylacrylat, 2- Acetoacetoxyethylmethacrylat, Diacetonacrylamid.

Neben den genannten Monomeren A), B), C) und D) können die erfindungsgemäßen Bindemittelpolymerisate auch weitere Monomere E) enthalten, um den jeweiligen Beschichtungsmassen eine höhere Festigkeit zu verleihen. Diese Monomere weisen normalerweise wenigstens eine Epoxygruppe oder wenigstens zwei nicht konjugierte ethylenisch ungesättigte Doppelbindungen auf.

Beispiele für Monomere E sind zwei Vinylreste aufweisende Monomere, zwei Vinylidenreste aufweisende Monomere sowie zwei Alkenylreste aufweisende Monomere. Besonders vorteilhaft sind dabei die Di- Ester zweiwertiger Alkohole mit α, β- monoethylenisch ungesättigten Monocarbonsäuren unter denen die Acryl- und Methacrylsäure bevorzugt sind. Beispiele für derartige zwei nicht konjugierte ethylenisch ungesättigte Doppelbindungen aufweisende Monomere sind Alkylenglykoldiacrylate und- dimethacrylate, wie Ethylenglykoldiacrylat, 1, 2- Propylenglykoldiacrylat, 1, 3- Propylenglykoldiacrylat, 1, 3- Butylenglykoldiacrylat, 1, 4- Butylenglykoldiacrylate, 1, 6- Hexanglykoldiacrylat und Ethylenglykoldimethacrylat, 1, 2- Propylenglykoldimethacrylat, 1, 3- Propylenglykoldimethacrylat, 1, 3- Butylenglykoldimethacrylat, 1, 4- Butylenglykoldimethacrylat, 1, 6- Hexandiglycoldimethacrylat sowie Divinylbenzol, Vinylmethacrylat, Vinylacrylat, Allylmethacrylat, Allylacrylat, Diallylmaleat, Diallylfumarat, Cyclopentadienylacrylat, Triallylcyanurat oder Triallylisocyanurat. Weitere Beispiele für solche Monomere sind auch Siloxangruppen enthaltende Monomere, wie die Vinyltrialkoxysilane, z.B. Vinyltrimethoxysilan, Vinyltriethoxysilan, Alkylvinyldialkoxysilane oder (Meth) acryloxyalkyltrialkoxysilane, z.B. (Meth) acryloxyethyltrimethoxysilan, (Meth) acryloxypropyltrimethoxysilan zu nennen.

Die genannten Monomere E) können in Mengen von 0,05 bis 1, vorzugsweise 0,05 bis 0,5 Gew.-Teilen, bezogen auf 100 Gew.-Teile Monomere A) plus B) verwendet werden.

Erfindungsgemäß werden im Rahmen des vorliegenden Verfahrens Dispergiermittel mitverwendet, die sowohl die Monomerentröpfchen, wie auch die gebildeten Polymerisatteilchen im wässrigen Medium dispers verteilt halten, und so die Stabilität der erzeugten wässrigen Polymerisatdispersion gewährleisten. Als Dispergiermittel kommen sowohl die zur Durchführung von radikalischen wässrigen Emulsionspolymerisationen üblicherweise eingesetzten Schutzkolloide als auch Emulgatoren in Betracht.

Geeignete Schutzkolloide sind beispielsweise Polyvinylalkohole, Polyalkylenglykole, Alkalimetallsalze von Polyacrylsäuren und Polymethacrylsäuren, Gelatinederivate oder Acrylsäure, Methacrylsäure, Maleinsäureanhydrid, 2- Acrylamido- 2- methylpropansulfonsäure und/ oder 4- Styrolsulfonsäure enthaltende Copolymerisate und deren Alkalimetallsalze aber auch N- Vinylpyrrolidon, N- Vinylcaprolactam, N- Vinylcarbazol, 1- Vinylimidazol, 2- Vinylimidazol, 2- Vinylpyridin, 4- Vinylpyridin, Acrylamid, Methacrylamid, amingruppentragende Acrylate, Methacrylate, Acrylamide und/ oder Methacrylamide enthaltende Homound Copolymerisate. Eine ausführliche Beschreibung weiterer geeigneter Schutzkolloide findet sich in Houben- Weyl, Methoden der organischen Chemie, Band XIV/ 1, Makromolekulare Stoffe, Georg- Thieme- Verlag, Stuttgart, 1961, Seiten 411 bis 420.

Selbstverständlich können auch Gemische aus Schutzkolloiden und/ oder Emulgatoren eingesetzt werden. Häufig werden als Dispergiermittel ausschließlich Emulgatoren eingesetzt, deren relative Molekulargewichte im Unterschied zu den Schutzkolloiden üblicherweise unter 1000 liegen. Sie können sowohl anionischer, kationischer oder nichtionischer Natur sein. Selbstverständlich müssen im Falle der Verwendung von Gemischen grenzflächenaktiver Substanzen die Einzelkomponenten miteinander verträglich sein, was im Zweifelsfall an Hand weniger Vorversuche überprüft werden kann. Im allgemeinen sind anionische Emulgatoren untereinander und mit nichtionischen Emulgatoren verträglich. Desgleichen gilt auch für kationische Emulgatoren, während anionische und kationische Emulgatoren meistens nicht miteinander verträglich sind. Eine Übersicht geeigneter Emulgatoren findet sich in Houben- Weyl, Methoden der organischen Chemie, Band XIV/ 1, Makromolekulare Stoffe, Georg- Thieme- Verlag, Stuttgart, 1961, Seiten 192 bis 208.

Erfindungsgemäß werden als Dispergiermittel jedoch insbesondere Emulgatoren eingesetzt.

Gebräuchliche nichtionische Emulgatoren sind z.B. ethoxylierte Mono-, Di- und Tri- Alkylphenole (EO- Grad: 3 bis 50, Alkylrest: $C_4$ bis $C_{12}$) sowie ethoxylierte Fettalkohole (EO- Grad: 3 bis 80; Alkylrest: $C_8$ bis $C_{36}$) . Beispiele hierfür sind die Lutensol® A- Marken ($C_{12}C_{14}$- Fettalkoholethoxylate, EO- Grad: 3 bis 8) , Lutensol® AO- Marken ($C_{13}C_{15}$- Oxoalkoholethoxylate, EO- Grad: 3 bis 30) , Lutensol® AT- Marken ($C_{16}C_{18}$- Fettalkoholethoxylate, EO- Grad: 11 bis 80) , Lutensol® ON- Marken ($C_{10}$- Oxoalkoholethoxylate, EO- Grad: 3 bis 11) und die Lutensol® TO- Marken ($C_{13}$- Oxoalkoholethoxylate, EO- Grad: 3 bis 20) der Fa. BASF SE.

Übliche anionische Emulgatoren sind z. B. Alkalimetall- und Ammoniumsalze von Alkylsulfaten (Alkylrest: $C_8$ bis $C_{12}$), von Schwefelsäurehalbestern ethoxylierter Alkanole (EO-Grad: 4 bis 30, Alkylrest: $C_{12}$ bis $C_{18}$) und ethoxylierter Alkylphenole (EO-Grad: 3 bis 50, Alkylrest: $C_4$ bis $C_{12}$), von Alkylsulfonsäuren (Alkylrest: $C_{12}$ bis $C_{18}$) und von Alkylarylsulfonsäuren (Alkylrest: $C_9$ bis $C_{18}$).

Als weitere anionische Emulgatoren haben sich ferner Verbindungen der allgemeinen Formel (I)

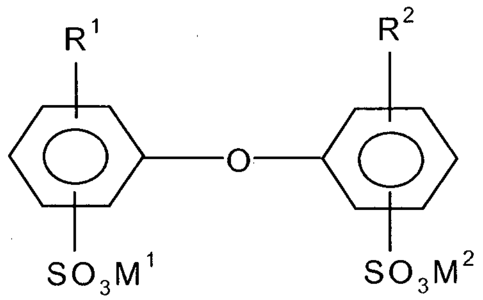

(I) ,

worin $R^1$ und $R^2$ H-Atome oder $C_4$- bis $C_{24}$-Alkyl bedeuten und nicht gleichzeitig H-Atome sind, und $M^1$ und $M^2$ Alkalimetallionen und/oder Ammoniumionen sein können, als geeignet erwiesen. In der allgemeinen Formel (I) bedeuten $R^1$ und $R^2$ bevorzugt lineare oder verzweigte Alkylreste mit 6 bis 18 C-Atomen, insbesondere mit 6, 12 und 16 C-Atomen oder Wasserstoff, wobei $R^1$ und $R^2$ nicht beide gleichzeitig H-Atome sind. $M^1$ und $M^2$ sind bevorzugt Natrium, Kalium oder Ammonium, wobei Natrium besonders bevorzugt ist. Besonders vorteilhaft sind Verbindungen (I), in denen $M^1$ und $M^2$ Natrium, $R^1$ ein verzweigter Alkylrest mit 12 C-Atomen und $R^2$ ein H-Atom oder $R^1$ ist. Häufig werden technische Gemische verwendet, die einen Anteil von 50 bis 90 Gew.-% des monoalkylierten Produktes aufweisen, wie beispielsweise Dowfax® 2A1 (Marke der Dow Chemical Company). Die Verbindungen (I) sind allgemein bekannt, z. B. aus US-A 4269749, und im Handel erhältlich.

Geeignete kationenaktive Emulgatoren sind in der Regel einen $C_6$- bis $C_{18}$- Alkyl-, -Alkylaryl- oder heterocyclischen Rest aufweisende primäre, sekundäre, tertiäre oder quartäre Ammoniumsalze, Alkanolammoniumsalze, Pyridiniumsalze, Imidazoliniumsalze, Oxazoliniumsalze, Morpholiniumsalze, Thiazoliniumsalze sowie Salze von Aminoxiden, Chinoliniumsalze, Isochinoliniumsalze, Tropyliumsalze, Sulfoniumsalze und Phosphoniumsalze. Beispielhaft genannt seien Dodecylammoniumacetat oder das entsprechende Sulfat, die Sulfate oder Acetate der verschiedenen 2- (N, N, N- Trimethylammonium) ethylparaffinsäureester, N- Cetylpyridiniumsulfat, N- Laurylpyridiniumsulfat sowie N- Cetyl-N, N, N- trimethylammoniumsulfat, N- Dodecyl- N, N, N- trimethylammoniumsulfat, N- Octyl- N, N, N- trimethlyammoniumsulfat, N, N- Distearyl- N, N- dimethylammoniumsulfat sowie das Gemini- Tensid N, N'- (Lauryldimethyl) ethylendiamindisulfat, ethoxyliertes Talgfettalkyl- N- methylammoniumsulfat und ethoxyliertes Oleylamin (beispielsweise Uniperol® AC der Fa. BASF AG, ca. 12 Ethylenoxideinheiten) . Zahlreiche weitere Beispiele finden sich in H. Stache, Tensid- Taschenbuch, Carl- Hanser- Verlag, München, Wien, 1981 und in McCutcheon's, Emulsifiers & Detergents, MC Publishing Company, Glen Rock, 1989. Günstig ist, wenn die anionischen Gegengruppen möglichst gering nucleophil sind, wie beispielsweise Perchlorat, Sulfat, Phosphat, Nitrat und Carboxylate, wie beispielsweise Acetat, Trifluoracetat, Trichloracetat, Propionat, Oxalat, Citrat, Benzoat, sowie konjugierte Anionen von Organosulfonsäuren, wie zum Beispiel Methylsulfonat, Trifluormethylsulfonat und para- Toluolsulfonat, weiterhin Tetrafluoroborat, Tetraphenylborat, Tetrakis(pentafluorophenyl) borat, Tetrakis [bis (3, 5- trifluormethyl) phenyl] borat, Hexafluorophosphat, Hexafluoroarsenat oder Hexafluoroantimonat.

Die als Dispergiermittel bevorzugt eingesetzten Emulgatoren werden vorteilhaft in einer Gesamtmenge ≥ 0,1 und ≤ 10 Gew.-%, vorzugsweise ≥ 0,1 und ≤ 5 Gew.-%, insbesondere ≥ 0,5 und ≤ 4 Gew.-%, jeweils bezogen auf die Gesamtmonomerenmenge, eingesetzt.

Die Gesamtmenge der als Dispergiermittel zusätzlich oder statt der Emulgatoren eingesetzten Schutzkolloide beträgt oft ≥ 0,1 und ≤ 10 Gew.-% und häufig ≥ 0,2 und ≤ 7 Gew.-%, jeweils bezogen auf die Gesamtmonomerenmenge.

Bevorzugt werden jedoch anionische und/oder nichtionische Emulgatoren und insbesondere bevorzugt anionische Emulgatoren als Dispergiermittel eingesetzt.

Erfindungsgemäß wird wenigstens eine Teilmenge der Dispergiermittel im wässrigen Polymerisationsmedium gemeinsam mit der Teilmenge der Monomeren A und/oder B sowie der Verbindung der allgemeinen Formel I in Polymerisationsstufe 1 vorgelegt und die gegebenenfalls verbliebene Restmenge dem wässrigen Polymerisationsmedium in Polymerisationsstufen 2 und 3 diskontinuierlich, in einer oder mehreren Portionen, oder kontinuierlich mit gleichbleibenden oder sich ändernden Mengenströmen, insbesondere als Bestandteil einer wässrigen Monomerenemulsion, enthaltend die Gesamtmenge der Monomeren A und die Restmengen der Monomeren B, zudosiert. Dabei wird in Polymerisationsstufe 1 die Menge an Dispergiermittel, insbesondere der Emulgatoren so gewählt, dass sie ≥ 2 mmol, bevorzugt ≥ 5 mmol pro 10 g Monomere A und/oder B beträgt.

Die Auslösung der radikalisch initiierten wässrigen Emulsionspolymerisation erfolgt mittels eines radikalischen Polymerisationsinitiators (Radikalinitiator) . Es kann sich dabei prinzipiell sowohl um Peroxide als auch um Azoverbindungen handeln. Selbstverständlich kommen auch Redoxinitiatorsysteme in Betracht. Als Peroxide können prinzipiell anorganische Peroxide, wie Wasserstoffperoxid oder Peroxodisulfate, wie die Mono- oder Di- Alkalimetall- oder Ammoniumsalze der Peroxodischwefelsäure, wie beispielsweise deren Mono- und DiNatrium-, -Kalium- oder Ammoniumsalze oder organische Peroxide, wie Alkylhydroperoxide, beispielsweise tert.- Butyl-, p- Mentyl- oder Cumylhydroperoxid, sowie Dialkyl- oder Diarylperoxide, wie Di- tert.- Butyl- oder Di- Cumylperoxid eingesetzt werden. Als Azoverbindung finden im wesentlichen 2, 2'- Azobis (isobutyronitril) , 2, 2'- Azobis (2, 4- dimethylvaleronitril) und 2, 2'- Azobis (amidinopropyl) dihydrochlorid (AIBA, entspricht V- 50 von Wako Chemicals) Verwendung. Als Oxidationsmittel für Redoxinitiatorsysteme kommen im wesentlichen die oben genannten Peroxide in Betracht. Als entsprechende Reduktionsmittel können Schwefelverbindungen mit niedriger Oxidationsstufe, wie Alkalisulfite, beispielsweise Kalium- und/ oder Natriumsulfit, Alkalihydrogensulfite, beispielsweise Kalium- und/ oder Natriumhydrogensulfit, Alkalimetabisulfite, beispielsweise Kalium- und/ oder Natriummetabisulfit, Formaldehydsulfoxylate, beispielsweise Kalium- und/ oder Natriumformaldehydsulfoxylat, Alkalisalze, speziell Kalium- und/ oder Natriumsalze aliphatische Sulfinsäuren und Alkalimetallhydrogensulfide, wie beispielsweise Kalium- und/ oder Natriumhydrogensulfid, Salze mehrwertiger Metalle, wie Eisen- (II)-sulfat, Eisen- (II)- Ammoniumsulfat, Eisen- (II)- phosphat, Endiole, wie Dihydroxymaleinsäure, Benzoin und/ oder Ascorbinsäure sowie reduzierende Saccharide, wie Sorbose, Glucose, Fructose und/ oder Dihydroxyaceton eingesetzt werden. In der Regel beträgt die Menge des eingesetzten Radikalinitiators, bezogen auf die Gesamtmonomerenmenge, 0, 01 bis 5 Gew.- %, bevorzugt 0, 1 bis 3 Gew.- % und insbesondere bevorzugt 0, 1 bis 1, 5 Gew.- %.

Erfindungsgemäß kann die Gesamtmenge des Radikalinitiators im wässrigen Polymerisationsmedium vor Initiierung der Polymerisationsreaktion in Polymerisationsstufe 1 vorgelegt werden. Es ist aber auch möglich, gegebenenfalls lediglich eine Teilmenge des Radikalinitiators im wässrigen Polymerisationsmedium vor Initiierung der Polymerisationsreaktion in Polymerisationsstufe 1 vorzulegen und dann unter Polymerisationsbedingungen während der erfindungsgemäßen radikalischen Emulsionspolymerisation in Polymerisationsstufe 1, Polymerisationsstufe 2 und 3 die Gesamtmenge bzw. die gegebenenfalls verbliebene Restmenge nach Maßgabe des Verbrauchs diskontinuierlich in einer oder mehreren Portionen oder kontinuierlich mit gleichbleibenden oder sich ändernden Mengenströmen zuzugeben.

Unter Initiierung der Polymerisationsreaktion wird der Start der Polymerisationsreaktion der im wässrigen Polymerisationsmedium vorliegenden Monomeren nach Radikalbildung des Radikalinitiators verstanden. Dabei kann die Initiierung der Polymerisationsreaktion durch Zugabe von Radikalinitiator zum wässrigen Polymerisationsmedium im Polymerisationsgefäß unter Polymerisationsbedingungen erfolgen. Es ist aber auch möglich, dass eine Teil- oder die Gesamtmenge des Radikalinitiators dem die vorgelegten Monomeren A und/oder B enthaltenden wässrigen Polymerisationsmedium im Polymerisationsgefäß in Polymerisationsstufe 1 unter Bedingungen, welche nicht geeignet sind eine Polymerisationsreaktion auszulösen, beispielsweise bei tiefer Temperatur, zugegeben werden und danach im wässrigen Polymerisationsmedium Polymerisationsbedingungen eingestellt werden. Unter Polymerisationsbedingungen sind dabei generell diejenigen Temperaturen und Drücke zu verstehen, unter denen die radikalisch initiierte wässrige Emulsionspolymerisation mit ausreichender Polymerisationsgeschwindigkeit verläuft. Sie sind insbesondere abhängig vom verwendeten Radikalinitiator. Vorteilhaft werden Art und Menge des Radikalinitiators, Polymerisationstemperatur und Polymerisationsdruck so ausgewählt, dass immer genügend Startradikale zur Verfügung stehen, um die Polymerisationsreaktion zu initiieren bzw. aufrechtzuerhalten.

Als Reaktionstemperatur für die erfindungsgemäße radikalische wässrige Emulsionspolymerisation kommt der

gesamte Bereich von 0 bis 170 °C in Betracht. Dabei werden in der Regel Temperaturen von 50 bis 120 °C, häufig 60 bis 110 °C und oft 70 bis 100 °C angewendet. Die erfindungsgemäße radikalische wässrige Emulsionspolymerisation kann bei einem Druck kleiner, gleich oder größer 1 atm (Atmosphärendruck) durchgeführt werden, so dass die Polymerisationstemperatur 100 °C übersteigen und bis zu 170 °C betragen kann. Vorzugsweise werden leichtflüchtige Monomere, wie beispielsweise Ethylen, Butadien oder Vinylchlorid unter erhöhtem Druck polymerisiert. Dabei kann der Druck 1,2, 1,5, 2, 5, 10, 15 bar (absolut) oder noch höhere Werte einnehmen. Werden Emulsionspolymerisationen im Unterdruck durchgeführt, werden Drücke von 950 mbar, häufig von 900 mbar und oft 850 mbar (absolut) eingestellt. Vorteilhaft wird die erfindungsgemäße radikalische wässrige Emuslionspolymerisation bei 1 atm unter Sauerstoffausschluß, beispielsweise unter Inertgasatmosphäre, wie beispielsweise unter Stickstoff oder Argon durchgeführt.

Das wässrige Reaktionsmedium kann prinzipiell auch in untergeordneten Mengen (≤ 5 Gew.-%) wasserlösliche organische Lösungsmittel, wie beispielsweise Methanol, Ethanol, Isopropanol, Butanole, Pentanole, aber auch Aceton etc. umfassen. Bevorzugt wird das erfindungsgemäße Verfahren jedoch in Abwesenheit solcher Lösungsmittel durchgeführt.

Neben den vorgenannten Komponenten können im erfindungsgemäßen Verfahren optional auch radikalkettenübertragende Verbindungen eingesetzt werden, um das Molekulargewicht der durch die Polymerisation zugänglichen Polymerisate zu reduzieren bzw. zu kontrollieren. Dabei kommen im wesentlichen aliphatische und/ oder araliphatische Halogenverbindungen, wie beispielsweise n- Butylchlorid, n- Butylbromid, n- Butyljodid, Methylenchlorid, Ethylendichlorid, Chloroform, Bromoform, Bromtrichlormethan, Dibromdichlormethan, Tetrachlorkohlenstoff, Tetrabromkohlenstoff, Benzylchlorid, Benzylbromid, organische Thioverbindungen, wie primäre, sekundäre oder tertiäre aliphatische Thiole, wie beispielsweise Ethanthiol, n- Propanthiol, 2- Propanthiol, n- Butanthiol, 2- Butanthiol, 2- Methyl- 2- propanthiol, n- Pentanthiol, 2- Pentanthiol, 3- Pentanthiol, 2- Methyl- 2- butanthiol, 3- Methyl- 2- butanthiol, n- Hexanthiol, 2- Hexanthiol, 3- Hexanthiol, 2- Methyl- 2- pentanthiol, 3- Methyl- 2- pentanthiol, 4- Methyl- 2- pentanthiol, 2- Methyl- 3- pentanthiol, 3- Methyl- 3- pentanthiol, 2- Ethylbutanthiol, 2- Ethyl- 2- butanthiol, n- Heptanthiol und seine isomeren Verbindungen, n- Octanthiol und seine isomeren Verbindungen, n- Nonanthiol und seine isomeren Verbindungen, n- Decanthiol und seine isomeren Verbindungen, n- Undecanthiol und seine isomeren Verbindungen, n- Dodecanthiol und seine isomeren Verbindungen, n- Tridecanthiol und seine isomeren Verbindungen, substituierte Thiole, wie beispielsweise 2- Hydroxyethanthiol, aromatische Thiole, wie Benzolthiol, ortho-, meta-, oder para- Methylbenzolthiol, sowie alle weiteren im Polymerhandbook 3rd edtition, 1989, J. Brandrup und E.H. Immergut, John Wiley & Sons, Abschnitt II, Seiten 133 bis 141, beschriebenen Schwefelverbindungen, aber auch aliphatische und/ oder aromatische Aldehyde, wie Acetaldeyhd, Propionaldehyd und/ oder Benzaldehyd, ungesättigte Fettsäuren, wie Ölsäure, Diene mit nicht konjugierten Doppelbindungen, wie Divinylmethan oder Vinylcyclohexan oder Kohlenwasserstoffe mit leicht abstrahierbaren Wasserstoffatomen, wie beispielsweise Toluol, zum Einsatz. Es ist aber auch möglich, Gemische sich nicht störender vorgenannter radikalkettenübertragender Verbindungen einzusetzen.

Die im erfindungsgemäßen Verfahren optional eingesetzte Gesamtmenge der radikalkettenübertragenden Verbindungen, bezogen auf die Gesamtmonomerenmenge, ist in der Regel ≤ 5 Gew.-%, oft ≤ 3 Gew.-% und häufig ≤ 1 Gew.-%.

Häufig ist es günstig, wenn eine Teil- oder die Gesamtmenge der optional eingesetzten radikalkettenübertragenden Verbindung dem wässrigen Polymerisationsmedium vor der Initiierung der radikalischen Emulsionspolymerisation in Polymerisationsstufe 1 zugeführt wird. Insbesondere günstig ist es jedoch, wenn eine Teil- oder die Gesamtmenge der optional eingesetzten radikalkettenübertragenden Verbindung dem wässrigen Polymerisationsmedium gemeinsam mit den Monomeren A und Monomeren B in der Polymerisationsstufe 2 und/oder 3 zugeführt wird.

Erfindungswesentlich ist, dass im wässrigen Polymerisationsmedium in Polymerisationsstufe 1 zuerst lediglich 0,1 bis 10 Gew.-%, vorteilhaft ≥ 1 und ≤ 8 Gew.-% und insbesondere vorteilhaft ≥ 2 und ≤ 6 Gew.-% der Gesamtmenge des wenigstens einen Monomeren A und/oder B vorgelegt und polymerisiert werden und daran anschließend in Polymerisationsstufe 2 und 3 die Restmengen des wenigstens einen Monomeren A sowie des wenigstens einen Monomeren B dem wässrigen Polymerisationsmedium unter Polymerisationsbedingungen zugegeben und polymerisiert werden.

Dabei kann die Dosierung der Restmengen der Monomeren A und der Monomeren B in Polymerisationsstufe 2 und 3 diskontinuierlich in einer oder mehreren Portionen oder kontinuierlich mit gleichbleibenden oder sich ändernden Mengenströmen erfolgen. Bevorzugt erfolgt die Dosierung der Monomeren A und B kontinuierlich mit gleichbleibenden Mengenströmen. Auch kann die Restmengen der Monomeren A und der Monomeren B in separaten Einzelströmen oder als Monomerengemisch dosiert werden. Bevorzugt erfolgt die Dosierung der Restmengen der Monomeren A und der Monomeren B als Monomerengemisch, insbesondere vorteilhaft in Form einer wässrigen Monomerenemulsion. Wesentlich ist, dass erfindungsgemäß auch Verfahrensvarianten umfasst sein sollen, bei denen sich in Polymerisationsstufe 2 und 3 die Zusammensetzungen der jeweiligen Monomeren A und/oder Monomeren B ändern, beispielsweise in einer dem Fachmann geläufigen Gradienten- oder Stufenfahrweise. Mit Vorteil erfolgt die Zugabe der Monomeren A und/oder der Monomeren B in Polymerisationsstufe 2 und 3 häufig nach der Gradienten- oder der Stufenfahrweise und insbesondere vorteilhaft nach der Stufenfahrweise.

Mit besonderem Vorteil erfolgt das erfindungsgemäße Verfahren dergestalt, dass die Monomeren A und/oder

B in Polymerisationsstufe 1 bzw. die Monomeren A und B in Polymerisationsstufe 2 und 3 bis zu einem Umsatz von ≥ 95 Gew.-%, vorteilhaft ≥ 98 Gew.-% und insbesondere vorteilhaft ≥ 99 Gew.-% umgesetzt werden. Häufig ist es vorteilhaft, wenn die nach Abschluss der Polymerisationsstufe 2 und 3 erhaltene wässrige Polymerisatdispersion einer Nachbehandlung zur Reduzierung des Restmonomerengehalts unterzogen wird.

Dabei erfolgt die Nachbehandlung entweder chemisch, beispielsweise durch Vervollständigung der Polymerisationsreaktion durch Einsatz eines effektiveren Radikalinitiatorensystems (sogenannte Nachpolymerisation) und/oder physikalisch, beispielsweise durch Strippung der wässrigen Polymerisatdispersion mit Wasserdampf oder Inertgas. Entsprechende chemische und/oder physikalische Methoden sind dem Fachmann geläufig [siehe beispielsweise EP-A 771 328, DE-A 196 24 299, DE-A 196 21 027, DE-A 197 41 184, DE-A 197 41 187, DE-A 198 05 122, DE-A 198 28 183, DE-A 198 39 199, DE-A 198 40 586 und 198 47 115]. Dabei bietet die Kombination aus chemischer und physikalischer Nachbehandlung den Vorteil, dass neben den nicht umgesetzten ethylenisch ungesättigten Monomeren, auch noch andere störende leichtflüchtige organischen Bestandteile (die sogenannten VOCs [volatile organic compounds]) aus der wässrigen Polymerisatdispersion entfernt werden.

Die nach dem erfindungsgemäßen Verfahren zugänglichen wässrigen Polymerisatdispersionen weisen Polymerisatteilchen auf, die eine gewichtsmittlere Teilchendurchmesser $D_w$ im Bereich ≥ 10 und ≤ 500 nm, bevorzugt ≥ 20 und ≤ 200 nm und insbesondere bevorzugt > 30 nm bis ≤ 60 nm aufweisen. Die Bestimmung der gewichtsmittleren Teilchendurchmesser ist dem Fachmann bekannt und erfolgt beispielsweise über die Methode der Analytischen Ultrazentrifuge. Unter gewichtsmittlerem Teilchendurchmesser wird in dieser Schrift der nach der Methode der Analytischen Ultrazentrifuge ermittelte gewichtsmittlere $D_{w50}$- Wert verstanden (vgl. hierzu S.E. Harding et al., Analytical Ultracentrifugation in Biochemistry and Polymer Science, Royal Society of Chemistry, Cambridge, Great Britain 1992, Chapter 10, Analysis of Polymer Dispersions with an Eight- Cell- AUC- Multiplexer: High Resolution Particle Size Distribution and Density Gradient Techniques, W. Mächtle, Seiten 147 bis 175) .

Die nach dem erfindungsgemäßen Verfahren zugänglichen wässrigen Polymerisatdispersionen mit gewichtsmittleren Teilchendurchmessern $D_w$ ≤ 60 nm weisen eine überraschend gute Blockfestigkeit auf und eignen sich daher besonders als Bindemittel für die Beschichtung von Untergründen, insbesondere in transparenten wässrigen Formulierungen für Holzbeschichtungen.

Hierbei zeigen sich häufig Vorteile wie geringerer Bedarf an Verdickern zur Einstellung einer bestimmten Viskosität sowie gute und tiefe Einfärbung bei Verwendung von Farbpigmenten, gutes Eindringvermögen der Formulierung in die Holzoberfläche oder gute "Anfeuerung" der Holzmaserung. Außerdem weisen die erfindungsgemäßen wässrigen Polymerisatdispersionen eine verbesserte Filtrierbarkeit im Vergleich zu entsprechenden, nicht erfindungsgemäßen wässrigen Polymerisatdispersionen auf.

Ferner sind aus den erfindungsgemäßen wässrigen Polymerisatdispersionen in einfacher Weise (beispielsweise Gefrier- oder Sprühtrocknung) die entsprechenden Polymerisatpulver zugänglich. Diese erfindungsgemäß zugänglichen Polymerisatpulver lassen sich ebenfalls als Komponente bei der Herstellung von Klebstoffen, Dichtmassen, Kunststoffputzen, Papierstreichmassen, Faservliesen, Anstrichmitteln und Beschichtungsmitteln für organische Substrate sowie zur Modifizierung von mineralischen Bindemitteln einsetzen.

Die wässrige Polymerdispersion weist üblicherweise einen Feststoffgehalt von 20 bis 70 Gew.-%, vorzugsweise 40 bis 65 Gew.-%, auf.

Die erhaltene wässrige Polymerdispersion kann als solche oder gemischt mit weiteren, in der Regel filmbildenden, Polymeren als Bindemittelzusammensetzung in wässrigen Beschichtungsmitteln, wie Farb- oder Lackmischungen, verwendet werden.

Selbstverständlich können die nach dem erfindungsgemäßen Verfahren zugänglichen erfindungsgemäßen wässrigen Polymerisatdispersionen auch als Komponente bei der Herstellung von Klebstoffen, Dichtmassen, Kunststoffputzen, Papierstreichmassen, Faservliesen, und Beschichtungsmitteln für organische Substrate sowie zur Modifizierung von mineralischen Bindemitteln eingesetzt werden.

Ein weiterer Gegenstand der Erfindung ist ein Beschichtungsmittel in Form einer wässrigen Zusammensetzung, enthaltend wenigstens eine Polymerisatdisperion, wie zuvor definiert.

Die erfindungsgemäßen Bindemittelzusammensetzungen kommen vorzugsweise in wässrigen Anstrichmitteln zum Einsatz. Diese Anstrichmittel liegen beispielsweise in Form eines unpigmentierten Systems (Klarlacks) oder eines pigmentierten Systems vor. Der Anteil der Pigmente kann durch die Pigmentvolumenkonzentration (PVK) beschrieben werden. Die PVK beschreibt das Verhältnis des Volumens an Pigmenten ($V_P$) und Füllstoffen ($V_F$) zum Gesamtvolumen, bestehend aus den Volumina an Bindemittel ($V_B$), Pigmenten und Füllstoffen eines getrockneten Beschichtungsfilms in Prozent: PVK = $(V_P + V_F) \times 100 / (V_P + V_F + V_B)$. Anstrichmittel lassen sich anhand der PVK beispielsweise wie folgt einteilen:

| | |
|---|---|
| hochgefüllte Innenfarbe, waschbeständig, weiß/matt | ca. 85 |
| Innenfarbe, scheuerbeständig, weiß/matt | ca. 80 |

(fortgesetzt)

| | |
|---|---|
| Halbglanzfarbe, seidenmatt | ca. 35 |
| Halbglanzfarbe, seidenglänzend | ca. 25 |
| Hochglanzfarbe | ca. 15-25 |
| Außenfassadenfarbe, weiß | ca. 45-55 |
| Klarlack | 0 |

Ein weiterer Gegenstand der Erfindung ist ein Beschichtungsmittel in Form einer wässrigen Zusammensetzung , enthaltend

- wenigstens eine erfindungsgemäße Polymerisatdispersion, wie zuvor definiert,
- gegebenenfalls wenigstens einen anorganischen Füllstoff und/oder wenigstens ein anorganisches Pigment,
- gegebenenfalls wenigstens ein übliches Hilfsmittel, und
- Wasser.

Die erfindungsgemäßen Beschichtungsmittel in Form einer wässrigen Zusammensetzung kommen vorzugsweise als Anstrichmittel zum Einsatz. Eine bevorzugte Ausführungsform sind Anstrichmittel in Form eines Klarlacks. Eine weitere Ausführungsform sind Anstrichmittel in Form einer Dispersionsfarbe.

Besonders bevorzugt eignen sich die erfindungsgemäßen Polymerdispersionen als Bindemittel zur Herstellung von Anstrichmitteln für Holzbeschichtungen.

Geeignete Pigmente sind beispielsweise anorganische Weißpigmente wie Titandioxid, vorzugsweise in der Rutilform, Bariumsulfat, Zinkoxid, Zinksulfid, basisches Bleicarbonat, Antimontrioxid, Lithopone (Zinksulfid + Bariumsulfat) oder farbige Pigmente, beispielsweise Eisenoxide, Ruß, Graphit, Zinkgelb, Zinkgrün, Ultramarin, Manganschwarz, Antimonschwarz, Manganviolett, Pariser Blau oder Schweinfurter Grün. Neben den anorganischen Pigmenten können die erfindungsgemäßen Dispersionsfarben auch organische Farbpigmente, z. B. Sepia, Gummigutt, Kasseler Braun, Toluidinrot, Pararot, Hansagelb, Indigo, Azofarbstoffe, anthrachinoide und indigoide Farbstoffe sowie Dioxazin, Chinacridon-, Phthalocyanin-, Isoindolinon- und Metallkomplexpigmente enthalten. Geeignet sind auch synthetische Weißpigmente mit Lufteinschlüssen zur Erhöhung der Lichtstreuung, wie die Ropaque®-Dispersionen. Weiterhin geeignet sind die Luconyl®-Marken der Fa. BASF SE, wie z.B. das Lyconyl®-Gelb.

Geeignete Füllstoffe sind z. B. Alumosilicate, wie Feldspäte, Silicate, wie Kaolin, Talkum, Glimmer, Magnesit, Erdalkalicarbonate, wie Calciumcarbonat, beispielsweise in Form von Calcit oder Kreide, Magnesiumcarbonat, Dolomit, Erdalkalisulfate, wie Calciumsulfat, Siliciumdioxid etc. In Anstrichmitteln werden naturgemäß feinteilige Füllstoffe bevorzugt. Die Füllstoffe können als Einzelkomponenten eingesetzt werden. In der Praxis haben sich jedoch Füllstoffmischungen besonders bewährt, z. B. Calciumcarbonat/Kaolin, Calciumcarbonat/Talkum. Glänzende Anstrichmittel weisen in der Regel nur geringe Mengen sehr feinteiliger Füllstoffe auf oder enthalten keine Füllstoffe.

Feinteilige Füllstoffe können auch zur Erhöhung der Deckkraft und/oder zur Einsparung von Weißpigmenten eingesetzt werden. Zur Einstellung der Deckkraft des Farbtons und der Farbtiefe werden vorzugsweise Abmischungen aus Farbpigmenten und Füllstoffen eingesetzt.

Das erfindungsgemäßeBeschichtungsmittel (wässrige Anstrichmittel) kann neben der Polymerdispersion, gegebenenfalls zusätzliche filmbildende Polymere, Pigment und weitere Hilfsmittel enthalten.

Zu den üblichen Hilfsmitteln zählen neben den bei der Polymerisation eingesetzten Emulgatoren, Netz- oder Dispergiermittel, wie Natrium-, Kalium- oder Ammoniumpolyphosphate, Alkalimetall- und Ammoniumsalze von Acrylsäure- oder Maleinsäureanhydridcopolymeren, Polyphosphonate, wie 1- Hydroxyethan- 1, 1- diphosphonsaures Natrium sowie Naphthalinsulfonsäuresalze, insbesondere deren Natriumsalze.

Weitere geeignete Hilfsmittel sind Verlaufsmittel, Entschäumer, Biozide und Verdicker. Geeignete Verdicker sind z. B. Assoziativverdicker, wie Polyurethanverdicker. Die Menge des Verdickers beträgt vorzugsweise weniger als 1 Gew.-%, besonders bevorzugt weniger als 0,6 Gew.-% Verdicker, bezogen auf Feststoffgehalt des Anstrichmittels.

Die Herstellung der erfindungsgemäßen Anstrichmittel erfolgt in bekannter Weise durch Abmischen der Komponenten in hierfür üblichen Mischvorrichtungen. Es hat sich bewährt, aus den Pigmenten, Wasser und gegebenenfalls den Hilfsmitteln eine wässrige Paste oder Dispersion zu bereiten, und anschließend erst das polymere Bindemittel, d. h. in der Regel die wässrige Dispersion des Polymeren mit der Pigmentpaste bzw. Pigmentdispersion zu vermischen.

Die erfindungsgemäßen Anstrichmittel enthalten in der Regel 30 bis 75 Gew.-% und vorzugsweise 40 bis 65 Gew.-% nichtflüchtige Bestandteile. Hierunter sind alle Bestandteile der Zubereitung zu verstehen, die nicht Wasser sind, zumindest aber die Gesamtmenge an Bindemittel, Pigment und Hilfsmittel, bezogen auf den Feststoffgehalt des Anstrichmittels. Bei den flüchtigen Bestandteilen handelt es sich vorwiegend um Wasser.

Das erfindungsgemäße Anstrichmittel kann in üblicher Weise auf Substrate aufgebracht werden, z. B. durch

Streichen, Spritzen, Tauchen, Rollen, Rakeln etc.

Es wird vorzugsweise als Bautenanstrichmittel, d. h. zum Beschichten von Gebäuden oder Gebäudeteilen verwendet. Es kann sich dabei um mineralische Untergründe wie Putze, Gips- oder Gipskartonplatten, Mauerwerk oder Beton, um Holz, Holzwerkstoffe, Metall oder Papier, z. B. Tapeten oder Kunststoff, z. B. PVC, handeln, vorzugsweise handelt es sich um Holz.

Die erfindungsgemäßen Anstrichmittel zeichnen sich aus durch einfache Handhabung und gute Verarbeitungseigenschaften. Die Anstrichmittel sind schadstoffarm. Sie haben gute anwendungstechnische Eigenschaften, z. B. eine gute Wasserfestigkeit, gute Nasshaftung, und gute Blockfestigkeit, eine gute Überstreichbarkeit und sie zeigen beim Auftragen einen guten Verlauf. Das verwendete Arbeitsgerät lässt sich leicht mit Wasser reinigen.

Die Erfindung soll anhand nachfolgender nicht einschränkender Beispiele erläutert werden.

Beispiele

a) Herstellung der wässrigen Polymerisatdispersionen

Der Feststoffgehalt wurde generell bestimmt, indem eine definierte Menge der wässrigen Polymerisatdispersion (ca. 1 g) in einem Aluminiumtiegel mit einem Innendurchmesser von ca. 5 cm bei 140 °C in einem Trockenschrank bis zur Gewichtskonstanz getrocknet wurde. Es wurden zwei separate Messungen durchgeführt. Die in den Beispielen angegebenen Werte stellen den Mittelwert der jeweiligen beiden Messergebnisse dar.

Die Lichtdurchlässigkeit (LD) wurde generell mittels einer mit entionisiertem Wasser auf einen Polymerisatfeststoffgehalt von 40 Gew.-% verdünnten Probe der wässrigen Polymerisatdispersion mittels eines Spektrophotometers DR/2010 der Fa. Hach, Deutschland bestimmt. Gemessen wird relativ zu Wasser, dem ein LD-Wert von 100 % zugeordnet wird. Die Bestimmung der Mindestfilmbildetemperatur (MFT) erfolge in Anlehnung an Ullmanns Enzyklopädie der technischen Chemie, 4. Aufl., Bd. 19, Verlag Chemie, Weinheim (1980), S. 17. Als Meßgerät diente eine Filmbildebank (Metallplatte, an die ein Temperaturgradient angelegt wird). Die Verfilmung erfolgte bei einer Naßschichtdicke von 1 mm. Als Mindestfilmbildetemperatur wird die Temperatur angegeben, bei der der Film beginnt, rissig zu werden.

Beispiel 1 (B1)

In einem mit Dosiereinrichtungen und Temperaturregelung ausgerüstetem Polymerisationsgefäß wurden bei 20 bis 25 °C (Raumtemperatur) unter Stickstoffatmosphäre

| | |
|---|---|
| 559,0 | g entionisiertes Wasser und |
| 66,7 g | einer 15 gew.-%igen wässrigen Lösung von Natriumlaurylsulfat |

vorgelegt und unter Rühren auf 87 °C aufgeheizt. Bei Erreichung dieser Temperatur wurde 50 g Methylmethacrylat und 10 g einer 50 gew.- %igen wässrigen Lösung des Natriumsatzes von Acrylamido- 2- methylpropansulfonsäure[a)] zugegeben und während einer halben Minute emulgiert. Anschließend wurde unter Aufrechterhaltung der Temperatur 2, 9 g von Zulauf 3 zugegeben und 5 Minuten polymerisiert. Danach wurden zeitgleich beginnend Zulauf 1 innerhalb von 120 Minuten und parallel dazu die Restmenge von Zulauf 3 innerhalb von 180 Minuten mit gleichbleibenden Mengenströmen kontinuierlich zudosiert. Nach dem Ende von Zulauf 1 wurde nach einer 15 Minuten dauernden Wartezeit Zulauf 2 gestartet und innerhalb von 45 Minuten mit gleichbleibendem Mengenstrom kontinuierlich zudosiert.

Zulauf 1 (homogene Mischung aus):

| | |
|---|---|
| 411,9 | g entionisiertes Wasser |
| 34,0 g | einer 15 gew.-%igen wässrigen Lösung von Natriumlaurylsulfat |
| 492,0 g | n-Butylacrylat |
| 159,2 g | Methylmethacrylat |
| 8,4 g | einer 50 gew.-%igen wässrigen Lösung von Acrylamid |
| 7,5 g | Methacrylsäure und |
| 47,1 g | einer 25 gew.-%igen Lösung von Ureidomethacrylat in Methylmethacrylat[b)] |

Zulauf 2 (homogene Mischung aus):

| | |
|---|---|
| 151,6 g | entionisiertes Wasser |
| 12,0 g | einer 15 gew.-%igen wässrigen Lösung von Natriumlaurylsulfat |
| 6,8 g | Methacrylsäure |
| 30,1 g | einer 25 gew.-%igen Lösung von Ureidomethacrylat in Methylmethacrylat [b)] und |
| 203,1 g | Methylmethacrylat |

Zulauf 3 (homogene Lösung aus):

| | |
|---|---|
| 26,6 g | entionisiertem Wasser und |
| 2,0 g | Natriumperoxodisulfat |

[a)] Lubrizol® 2405 der Fa. Lubrizol Deutschland GmbH
[b)] Plex® 6844-O der Fa. Röhm GmbH.

Nach Beendigung der Zuläufe 2 und 3 ließ man das Polymerisationsgemisch noch 30 Minuten bei 87 °C nachreagieren. Daran anschließend wurden dem Polymerisationsgemisch zeitgleich beginnend über separate Zulaufleitungen 16 g einer 5 gew.-%igen wässrigen Wasserstoffperoxid-Lösung und eine Lösung aus 1,4 g Ascorbinsäure und 67 g entionisiertem Wasser innerhalb von 60 Minuten mit gleichbleibenden Mengenströmen kontinuierlich zudosiert.
Anschließend wurde die erhaltene wässrige Polymerisatdispersion auf Raumtemperatur abgekühlt, mit 8,4 g einer 25 gew.-%igen wässrigen Ammoniaklösung neutralisiert und über ein 125 μm Filter filtriert.
Es wurden 2370 g der wässrigen Polymerisatdispersion mit einem Feststoffgehalt von 42,2 Gew.-% auf und einer MFT von 11 °C erhalten.
Die mit entionisiertem Wasser auf einen Feststoffgehalt von 40 Gew.-% verdünnte wässrige Polymerisatdispersion wies eine Lichtdurchlässigkeit von 11 % auf und einen gewichtsmittleren Teilchendurchmesser von 56 nm.

Vergleichsbeispiel 1 (VB1)

In einem mit Dosiereinrichtungen und Temperaturregelung ausgerüstetem Polymerisationsgefäß wurden bei 20 bis 25 °C (Raumtemperatur) unter Stickstoffatmosphäre

| | |
|---|---|
| 200,8 g | entionisiertes Wasser und |
| 35,0 g | einer 15 gew.-%igen wässrigen Lösung von Natriumlaurylsulfat |

vorgelegt und unter Rühren auf 87 °C aufgeheizt wurden und bei Erreichung dieser Temperatur 29,8 g von Zulauf 1 und anschließend unter Aufrechterhaltung der Temperatur 2,0 g von Zulauf 3 zugegeben und 5 Minuten polymerisiert. Danach wurden zeitgleich beginnend die Restmenge von Zulauf 1 innerhalb von 120 Minuten und parallel dazu die Restmenge von Zulauf 3 innerhalb von 165 Minuten mit gleichbleibenden Mengenströmen kontinuierlich zudosiert. Nach dem Ende von Zulauf 1 wurde Zulauf 2 gestartet und innerhalb von 45 Minuten mit gleichbleibendem Mengenstrom kontinuierlich zudosiert.

Zulauf 1 (homogene Mischung aus):

| | |
|---|---|
| 329,1 g | entionisiertes Wasser |
| 23,3 g | einer 15 gew.-%igen wässrigen Lösung von Natriumlaurylsulfat |
| 5,7 g | einer 50 gew.-%igen wässrigen Lösung von Acrylamid |
| 5,1 g | Acrylsäure |
| 27,0 g | einer 25 gew.-%igen Lösung von Ureidomethacrylat in Methylmethacrylat[b)] |

(fortgesetzt)

| | |
|---|---|
| 199,2 g | Methylmethacrylat und |
| 285,5 g | 2-Ethylhexylacrylat |

Zulauf 2 (homogene Mischung aus):

| | |
|---|---|
| 174,4 g | entionisiertes Wasser |
| 8,9 g | einer 15 gew.-%igen wässrigen Lösung von Natriumlaurylsulfat |
| 5,1 g | Acrylsäure |
| 27,0 g | einer 25 gew.-%igen Lösung von Ureidomethacrylat in Methylmethacrylat[b)] und |
| 148,2 g | Methylmethacrylat |

Zulauf 3 (homogene Lösung aus):

| | |
|---|---|
| 13,0 g | entionisiertem Wasser und |
| 1,0 g | Natriumperoxodisulfat |

Nach Beendigung der Zuläufe 2 und 3 ließ man das Polymerisationsgemisch noch 30 Minuten bei 87 °C nachreagieren. Daran anschließend wurden dem Polymerisationsgemisch zeitgleich beginnend über separate Zulaufleitungen 22,4 g einer 5 gew.-%igen wässrigen Wasserstoffperoxid-Lösung und eine Lösung aus 1,0 g Ascorbinsäure und 26,5 g entionisiertem Wasser innerhalb von 60 Minuten mit gleichbleibenden Mengenströmen kontinuierlich zudosiert.

Anschließend wurde die erhaltene wässrige Polymerisatdispersion auf Raumtemperatur abgekühlt, mit 5,9 g einer 25 gew.-%igen wässrigen Ammoniaklösung neutralisiert und über ein 125 µm Filter filtriert.

Die erhaltene 1544 g der wässrigen Polymerisatdispersion wies einen Feststoffgehalt von 45,2 Gew.-% auf. Die MFT betrug 13°C. Die mit entionisiertem Wasser verdünnte wässrige Polymerisatdispersion wies eine Lichtdurchlässigkeit von 1 % auf und einen gewichtsmittleren Teilchendurchmesser von 63 nm.

Vergleichsbeispiel 2 (VB2)

In einem mit Dosiereinrichtungen und Temperaturregelung ausgerüstetem Polymerisationsgefäß wurden bei 20 bis 25 °C (Raumtemperatur) unter Stickstoffatmosphäre

| | |
|---|---|
| 346,3 g | entionisiertes Wasser und |
| 201,2 g | einer 15 gew.-%igen wässrigen Lösung von Natriumlaurylsulfat |

vorgelegt und unter Rühren auf 87 °C aufgeheizt wurden und bei Erreichung dieser Temperatur 57,4 g von Zulauf 1 und anschließend unter Aufrechterhaltung der Temperatur 3,5 g von Zulauf 3 zugegeben und 5 Minuten polymerisiert. Danach wurden zeitgleich beginnend die Restmenge von Zulauf 1 innerhalb von 120 Minuten und parallel dazu die Restmenge von Zulauf 3 innerhalb von 165 Minuten mit gleichbleibenden Mengenströmen kontinuierlich zudosiert. Nach dem Ende von Zulauf 1 wurde Zulauf 2 gestartet und innerhalb von 45 Minuten mit gleichbleibendem Mengenstrom kontinuierlich zudosiert.

Zulauf 1 (homogene Mischung aus):

| | |
|---|---|
| 744,7 g | entionisiertes Wasser |
| 41,0 g | einer 15 gew.-%igen wässrigen Lösung von Natriumlaurylsulfat |
| 10,1 g | einer 50 gew.-%igen wässrigen Lösung von Acrylamid |

(fortgesetzt)

| | |
|---|---|
| 9,5 g | Methacrylsäure |
| 56,9 g | einer 25 gew.-%igen Lösung von Ureidomethacrylat in Methylmethacrylat b) |
| 342,3 g | Methylmethacrylat und |
| 504,0 g | 2-Ethylhexylacrylat |

Zulauf 2 (homogene Mischung aus):

| | |
|---|---|
| 154,1 g | entionisiertes Wasser |
| 14,5 g | einer 15 gew.-%igen wässrigen Lösung von Natriumlaurylsulfat |
| 8,2 g | Methacrylsäure |
| 36,3 g | einer 25 gew.-%igen Lösung von Ureidomethacrylat in Methylmethacrylat b) und |
| 245,1 g | Methylmethacrylat |

Zulauf 3 (homogene Lösung aus):

| | |
|---|---|
| 32,1 g | entionisiertem Wasser und |
| 2,4 g | Natriumperoxodisulfat |

Nach Beendigung der Zuläufe 2 und 3 ließ man das Polymerisationsgemisch noch 30 Minuten bei 87 °C nachreagieren. Daran anschließend wurden dem Polymerisationsgemisch zeitgleich beginnend über separate Zulaufleitungen 38,6 g einer 5 gew.-%igen wässrigen Wasserstoffperoxid-Lösung und eine Lösung aus 1,7 g Ascorbinsäure und 37,0 g entionisiertem Wasser innerhalb von 60 Minuten mit gleichbleibenden Mengenströmen kontinuierlich zudosiert.

Anschließend wurde die erhaltene wässrige Polymerisatdispersion auf Raumtemperatur abgekühlt, mit 10,1 g einer 25 gew.-%igen wässrigen Ammoniaklösung neutralisiert und über ein 125 µm Filter filtriert.

Man erhielt 2835 g der wässrigen Polymerisatdispersion. Sie wies einen Feststoffgehalt von 43,0 Gew.-% auf und eine MFT von 10°C. Die mit entionisiertem Wasser verdünnte wässrige Polymerisatdispersion wies eine Lichtdurchlässigkeit von 10 % auf. Der gewichtsmittlere Teilchendurchmesser war 44 nm.

b) Anwendungstechnische Untersuchungen

Die wässrigen Polymerisatdispersionen wurden mit entionisiertem Wasser auf einen Feststoffgehalt von 37,5 Gew.-% verdünnt. Je 246,9 g dieser verdünnten wässrigen Polymerisatdispersionen wurden bei Raumtemperatur als Bindemittel zu einer Rohstreichlasurformulierung, bestehend aus

| | |
|---|---|
| 26,4 g | entionisiertem Wasser |
| 3,0 g | Mergal® S 96 (Fungizid der Fa. Troy Chemie GmbH) |
| 0,3 g | AMP® 90 (Neutralisationsmittel der Fa. Angus Chemical Company) |
| 0,3 g | Silikontensid® Byk 346 (Netzmittel der Fa. Byk-Chemie GmbH) |
| 0,6 g | Tego Foamex® 810 (Entschäumer der Fa. Tego Chemie Service GmbH) |
| 1,5 g | Coatex® BR 100 P (Verdicker der Fa. Cognis Deutschland GmbH & Co KG) |
| 9,0 g | Luconyl® Gelb flüssig (Pigment der Fa. BASF SE) |
| 6,0 g | Propylenglykol |
| 3,0 g | Butyldiglykol |
| 3,0 g | Testbenzin K 60 (Lösemittel der Fa. Shell) |

zugegeben und homogen gemischt.

Blockprüfung

300 μm Naßschichtdicke auf Kieferholz, nach 24 Std Trocknung mit 200 g/$cm^2$ während 24 Std gegeneinander gepresst. Nach 7 T Trocknung mit 400 g/$cm^2$ gegeneinander gepresst.

Zur Prüfung der Blockfestigkeit der hergestellten Holzschutzlasuren wurden aus mit 100 μm Naßschichtdicke der Lasuren beschichteten Leneta-Folien (mit Ruß geschwärzte und gesinterte PVC-Folien der Schwegmann GmbH in D-53501 Grafschaft Gelsdorf) nach 24 h Trocknung bei 23°C und 50% relativer Luftfeuchtigkeit quadratische Probekörper einer Kantenlänge von 2 cm ausgeschnitten und jeweils paarweise mit der beschichteten Seite über einen Zeitraum von 1 h bzw. 24 h mit einer Auflagemasse von 5 kg bei 60°C gegeneinander gepreßt. Anschließend wurden die Probestücke nach Abkühlung auf 23°C wieder voneinander gelöst und die diesbezüglich erforderliche Abziehkraft sowie die dabei resuliterende Filmbeschaffenheit nach folgender Werteskala beurteilt:

- 0: Probestücke fallen unter der Einwirkung ihres eigenen Gewichtes auseinander, die Verfilmungen bleiben uvnerletzt;
- 1: Probestücke lassen sich ohne nennenswerten Kraftaufwand voneinander trennen, die Verfilmungen bleiben unverletzt;
- 2: Zur Trennung der Probestücke ist ein geringer Kraftaufwand erforderlich, die Verfilmungen bleiben unverletzt;
- 3: Zur Trennung der Probestücke ist ein erhöhter Kraftaufwnd erforderlich, die Verfilmungen erfahren kleine Löcher und Risse;
- 4: Zur Trennung der Probestücke ist ein großer Kraftaufwnd erforderlich, die Verfilmungen erleiden größere Löcher und Risse;
- 5: Die Probestücke lassen sich nur unter sehr starkem Kraftaufwand voneinander trennen und die Verfilmungen erleiden bei der Trennung starke Verletzungen.

Nasstransparenz

Prüfgeräte und Prüfmittel: Teflonbeschichtete Edelstahlplatten 600 x 500 x 10 mm, Erichsen-Filmaufziehgerät 1000 μm
Durchführung: Die zu testende Lasur wird auf die teflonbeschichtete Edelstahlplatte mit einem 1000μm Erichsen-Filmaufziehgerät appliziert. Die Versuchsreihe wird sofort im Vergleich nach dem Auftragen visuell mit Schulnoten beurteilen.

0 = Total transparent
1 = Spur einer Trübung
2 = Geringe Trübung
3 = Mittlere Trübung
4 = Starke Trübung
5 = Undurchsichtig

Schaumzahl

Prüfgeräte und Prüfmittel: Schaumprüfmaschine (Eigenbau, Hubmethode), 100 ml Standzylinder, Stoppuhr
Durchführung: 15 ml Dispersion mit 15 ml VE-Wasser vermischen. 100 ml Standzylinder mit Prüfflüssigkeit bis zur 30 ml Marke auffüllen.
Auswertung: Schaumzahl nach 20, 40, 60, 80 Sekunden die Höhe des Schaums an der Skala des Standzylinders ablesen.

Schaumzerfall

Prüfgeräte und Prüfmittel: Schaumprüfmaschine (Eigenbau, Hubmethode), 100 ml Standzylinder, Stoppuhr
Durchführung: 15 ml Dispersion mit 15 ml VE-Wasser vermischen. 100 ml Standzylinder mit Prüfflüssigkeit bis zur 30 ml Marke auffüllen.
Auswertung: Schaumabfall nach 1 min und nach 5 Minuten die Höhe des Schaums an der Skala des Standzylinders ablesen.

Ergebnisse[a)]

| | | | B1 | VB 1 | VB 2 |
|---|---|---|---|---|---|
| Naßtransparenz | | | 2 | 5 | 3 |
| Blocktest | 200 g/cm$^2$ | Kraft | 1-2 | 1 | 3 |
| | | Ausriss | 0 | 0 | 1 |
| | 400 g/cm$^2$ | Kraft | 1-2 | 1 | 1-2 |
| | | Ausriss | 0 | 0 | 0 |
| Schaumzahl | | Nach 20" | 52 | 58 | 68 |
| | | Nach 40" | 55 | 65 | 73 |
| | | Nach 60" | 58 | 68 | 77 |
| | | Nach 80" | 58 | 68 | 82 |
| Schaumzerfall | | Nach 1" | 54 | 65 | 80 |
| | | Nach 5" | 45 | 52 | 74 |

a) Nasstransparenz, Kraft und Ausriss in Schulnoten, Schaumzahl und -zerfall in ml.

## Patentansprüche

**1.** Wässrige Polymerisatdispersionen erhältlich durch zuerst die Herstellung einer "in situ" Saat, enthaltend hydrophile und hydrophobe Monomere, indem in einem wässrigen Polymerisationsmedium zuerst lediglich

| | |
|---|---|
| 0,1 bis 10 Gew.-% | der Gesamtmenge des wenigstens einen Monomeren A und / oder B sowie |
| 0,1 bis 10 Gew.-% | eines hydrophilen Monomers mit der allgemeinen Formel |

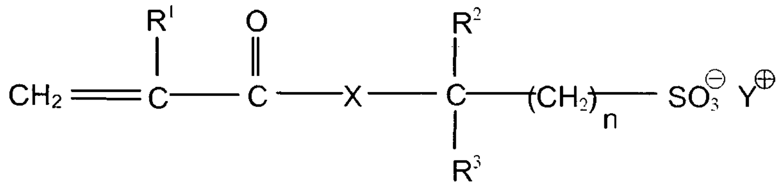

in der die Variablen folgende Bedeutung haben:

n = 0 bis 2
$R^1$, $R^2$, $R^3$ = unabhängig von einander Wasserstoff oder eine Mehtylgruppe
X = Sauerstoff oder die Iminogruppe (NH), und
Y = Wasserstoff, Alkalimetall oder Ammonium

vorgelegt (Monomerzusammensetzung I), und in Gegenwart von mindestens einem Emulgator und einem Radikalinitiator polymerisiert werden (Polymerisationsstufe 1),
worauf ein Copolymerisat mit einer Monomerzusammensetzung II (Polymerisationsstufe 2) enthaltend

| | |
|---|---|
| 40 - 60 Gew.-% | Monomere A, deren Homopolymerisate eine Glasübergangstemperatur unter 20°C besitzen |
| 15 - 30 Gew.-% | Monomere B, deren Homopolymerisate eine Glasübergangstemperatur über 50°C besitzen |
| 0,1 - 5 Gew.-% | mit Monomeren B copolymerisierbare $\alpha,\beta$-ungesättigte Carbon-, Sulfon-, Phosphonsäuren und/ oder Carbonsäureamide [Monomere C] |
| 0 - 5 Gew.-% | Ketogruppen enthaltende ethylenisch ungesättigte Monomere und/oder von C verschiedene ethylenisch ungesättigte und Stickstoff enthaltende Haftmonomere [Monomere D] |
| 0 - 5 Gew.-% | sonstige ethylenisch ungesättigte Monomeren E |

und in einer dritten Polymerisationsstufe ein Copolymerisat mit einer Monomerzusammensetzung III polymerisiert wird, enthaltend

| | |
|---|---|
| 0 - 5 Gew.-% | Monomere A, deren Homopolymerisate eine Glasübergangstemperatur unter 20°C besitzen |
| 10 - 30 Gew.-% | Monomere B, deren Homopolymerisate eine Glasüberganstemperatur über 50°C besitzen |
| 0,1 - 5 Gew.-% | mit Monomeren B copolymerisierbare $\alpha,\beta$-ungesättigte Carbon-, Sulfon- oder Phosphonsäuren und/oder Carbonsäureamide [Monomere C] |
| 0 - 5 Gew.-% | Ketogruppen enthaltende ethylenisch ungesättigte Monomere und/oder von C verschiedene ethylenisch ungesättigte und Stickstoff enthaltende Haftmonomere [Monomere D] |
| 0 - 5 Gew.-% | sonstige ethylenisch ungesättigte Monomere E. |

wobei die Summe der Monomerzusammensetzungen I + II + III jeweils 100% beträgt.

2. Wässrige Polymerisatdispersion gemäß Anspruch 1, **dadurch gekennzeichnet, dass** der gewichtsmittlere Teilchendurchmesser ≤ 60 nm beträgt.

3. Wässrige Polymerisatdispersion gemäß Anspruch 1 oder 2, **dadurch gekennzeichnet, dass** die bei der Polymerisation der Stufe 1 eingesetzte Emulgatormenge < 2 Gewichtsteile pro 100 Gewichtsteile Gesamtmenge Monomere beträgt.

4. Wässrige Polymerisatdispersion gemäß einem der Ansprüche 1 bis 3, **dadurch gekennzeichnet, dass** die Monomere A ausgewählt sind aus der Gruppe Ethylacrylat, n-Propylacrylat, n-Butylacrylat, Isobutylacrylat, sec-Butylacrylat, n-Hexylacrylat, 2-Ethylhexylacrylat, n-Hexylmethacrylat, 2-Ethylhexylmethacrylat oder 2-Propylheptylacrylat.

5. Wässrige Polymerisatdispersion gemäß einem der Ansprüche 1 bis 4, **dadurch gekennzeichnet, dass** die Monomere B eine Glasübergangstemperatur > 50° aufweisen.

6. Wässrige Polymerisatdispersion gemäß einem der Ansprüche 1 bis 5, **dadurch gekennzeichnet, dass** die Mindestfilmbildetemperatur der Polymerisatdispersion im Bereich von 0 bis 20 °C liegt.

7. Verfahren zur Herstellung einer wässrigen Polymerisatdispersion erhältlich durch zuerst die Herstellung einer "in situ" Saat, enthaltend hydrophile und hydrophobe Monomere, indem in einem wässrigen Polymerisationsmedium zuerst lediglich

| | |
|---|---|
| 0,1 bis 10 Gew.-% | der Gesamtmenge des wenigstens einen Monomeren A und / oder B sowie |
| 0,1 bis 10 Gew.-% | eines hydrophilen Monomers mit der allgemeinen Formel |

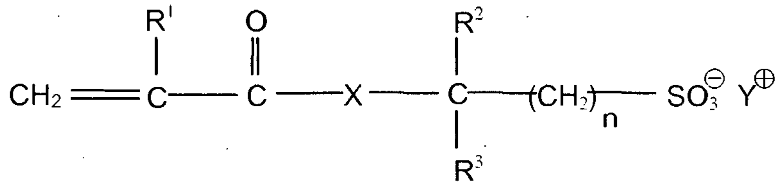

in der die Variablen folgende Bedeutung haben:

n = 0 bis 2
$R^1$, $R^2$, $R^3$ = unabhängig von einander Wasserstoff oder eine Mehtylgruppe
X = Sauerstoff oder die Iminogruppe (NH), und
Y = Wasserstoff, Alkalimetall oder Ammonium

vorgelegt (Monomerzusammensetzung I), und in Gegenwart von mindestens einem Emulgator und einem Radikalinitiator polymerisiert werden (Polymerisationsstufe 1),
worauf ein Copolymerisat mit einer Monomerzusammensetzung II (Polymerisationsstufe 2) enthaltend

| | |
|---|---|
| 40 - 60 Gew.-% | Moriomere A, deren Homopolymerisate eine Glasübergangstemperatur unter 20°C besitzen |
| 15 - 30 Gew.-% | Monomere B, deren Homopolymerisate eine Glasübergangstemperatur über 50°C besitzen |

(fortgesetzt)

| | |
|---|---|
| 0,1 - 5 Gew.-% | mit Monomeren B copolymerisierbare $\alpha,\beta$-ungesättigte Carbon-, Sulfon-, Phosphonsäuren und/ oder Carbonsäureamide [Monomere C] |
| 0 - 5 Gew.-% | Ketogruppen enthaltende ethylenisch ungesättigte Monomere und/oder von C verschiedene ethylenisch ungesättigte und Stickstoff enthaltende Haftmonomere [Monomere D] |
| 0 - 5 Gew.-% | sonstige ethylenisch ungesättigte Monomeren E |

und in einer dritten Polymerisationsstufe ein Copolymerisat mit einer Monorrierzusammensetzung III polymerisiert wird, enthaltend

| | |
|---|---|
| 0 - 5 Gew.-% | Monomere A, deren Homopolymerisate eine Glasübergangstemperatur unter 20°C besitzen |
| 10 - 30 Gew.-% | Monomere B, deren Homopolymerisate eine Glasüberganstemperatur über 50°C besitzen |
| 0,1 - 5 Gew.-% | mit Monomeren B copolymerisierbare $\alpha,\beta$-ungesättigte Carbon-, Sulfon- oder Phosphonsäuren und/oder Carbonsäureamide [Monomere C] |
| 0 - 5 Gew.-% | Ketogruppen enthaltende ethylenisch ungesättigte Monomere und/oder von C verschiedene ethylenisch ungesättigte und Stickstoff enthaltende Haftmonomere [Monomere D] |
| 0 - 5 Gew.-% | sonstige ethylenisch ungesättigte Monomere E. |

wobei die Summe der Monomerzusammensetzungen I + II + III jeweils 100% beträgt, **dadurch gekennzeichnet, dass** im wässrigen Polymerisationsmedium in Polymerisationsstufe 1 zuerst lediglich 0,1 bis 10 Gew.-%, der Gesamtmenge des wenigstens einen Monomeren A und/oder B vorgelegt und polymerisiert werden und daran anschließend in Polymerisationsstufe 2 und 3 die Restmengen des wenigstens einen Monomeren A sowie des wenigstens einen Monomeren B dem wässrigen Polymerisationsmedium unter Polymerisationsbedingungen zugegeben und polymerisiert werden.

**8.** Verfahren gemäß Anspruch 7, **dadurch gekennzeichnet, dass** wenigstens eine Teilmenge der Dispergiermittel im wässrigen Polymerisationsmedium gemeinsam mit der Teilmenge der Monomeren A und/oder B sowie der Verbindung der allgemeinen Formel I in Polymerisationsstufe 1 vorgelegt und die gegebenenfalls verbliebene Restmenge dem wässrigen Polymerisationsmedium in Polymerisationsstufen 2 und 3 diskontinuierlich, in einer oder mehreren Portionen, oder kontinuierlich mit gleichbleibenden oder sich ändernden Mengenströmen, insbesondere als Bestandteil einer wässrigen Monomerenemulsion, enthaltend die Gesamtmenge der Monomeren A und die Restmengen der Monomeren B, zudosiert.

**9.** Verfahren gemäß Anspruch 7 oder 8, **dadurch gekennzeichnet, dass** in Polymerisationsstufe 1 die Menge an Dispergiermittel, insbesondere der Emulgatoren so gewählt wird, dass sie $\geq$ 2 mmol pro 10 g Monomere A und/oder B beträgt.

**10.** Beschichtungsmittel in Form einer wässrigen Zusammensetzung , enthaltend

- wenigstens eine erfindungsgemäße Polymerisatdispersion gemäß einem der Ansprüche 1 bis 6,
- gegebenenfalls wenigstens einen anorganischen Füllstoff und/oder wenigstens ein anorganisches Pigment,
- gegebenenfalls wenigstens ein übliches Hilfsmittel, und
- Wasser.

**11.** Beschichtungsmittel gemäß Anspruch 10, **dadurch gekennzeichnet, dass** es sich bei dem Beschichtungsmittel um ein Anstrichmittel handelt.

**12.** Beschichtungsmittel gemäß Anspruch 10, **dadurch gekennzeichnet, dass** es sich bei dem Beschichtungsmittel um einen Klarlack handelt.

**13.** Beschichtungsmittel gemäß einem der Ansprüche 10 bis 12, **dadurch gekennzeichnet, dass** es sich bei dem Beschichtungsmittel um ein Anstrichmittel für Holzbeschichtungen handelt.

**14.** Verwendung der wässrigen Polymerdispersion gemäß einem der Ansprüche 1 bis 6, als Bindemittel zur Herstellung von Beschichtungsmitteln.

**15.** Verwendung der wässrigen Polymerdispersion gemäß einem der Ansprüche 1 bis 6, als Bindemittel zur Herstellung von Anstrichmitteln für Holzbeschichtungen.

**16.** Verwendung der nach dem Verfahren gemäß einem der Ansprüche 7 bis 9 hergestellten wässrigen Polymerdispersion, als Bindemittel zur Herstellung von Beschichtungsmitteln.

**17.** Verwendung der nach dem Verfahren gemäß einem der Ansprüche 7 bis 9 hergestellten wässrigen Polymerdispersion, als Bindemittel zur Herstellung von Anstrichmitteln für Holzbeschichtungen.

## Claims

**1.** An aqueous polymer dispersion obtainable through first the preparation of an "in situ" seed, comprising hydrophilic and hydrophobic monomers, by first introducing, in an aqueous polymerization medium, only

| | |
|---|---|
| 0.1% to 10% by weight | of the total amount of the at least one monomer A and/or B and also |
| 0.1% to 10% by weight | of a hydrophilic monomer having the general formula |

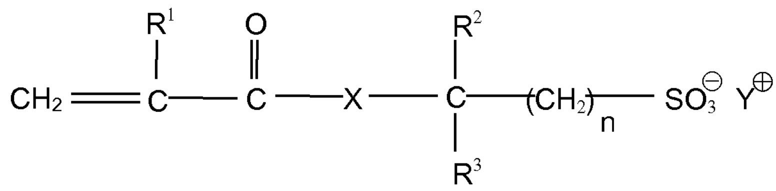

in which the variables have the following definition:

n = 0 to 2
$R^1$, $R^2$, $R^3$ = independently of one another hydrogen or a methyl group
X = oxygen or the imino group (NH), and
Y = hydrogen, alkali metal or ammonium

(monomer composition I), and carrying out polymerization in the presence of at least one emulsifier and a free-radical initiator (polymerization stage 1),
thereupon polymerizing a copolymer having a monomer composition II (polymerization stage 2) comprising

| | |
|---|---|
| 40%- 60% by weight | of monomers A whose homopolymers possess a glass transition temperature below 20°C |
| 15% - 30% by weight | of monomers B whose homopolymers possess a glass transition temperature above 50°C |
| 0.1% - 5% by weight | of α,β-unsaturated carboxylic, sulfonic, phosphonic acids and/or carboxamides copolymerizable with monomers B [monomers C] |
| 0% - 5% by weight | of ethylenically unsaturated monomers comprising keto groups, and/or non-C, ethylenically unsaturated, and nitrogen-comprising adhesion monomers [monomers D] |
| 0% - 5% by weight | of other ethylenically unsaturated monomers E |

and, in a third polymerization stage, polymerizing a copolymer having a monomer composition III, comprising

| | |
|---|---|
| 0% - 5% by weight | of monomers A whose homopolymers possess a glass transition temperature below 20°C |
| 10% - 30% by weight | of monomers B whose homopolymers possess a glass transition temperature above 50°C |
| 0.1% - 5% by weight | of α,β-unsaturated carboxylic, sulfonic or phosphonic acids and/or carboxamides copolymerizable with monomers B [monomers C] |
| 0% - 5% by weight | of ethylenically unsaturated monomers comprising keto groups, and/or non-C, ethylenically unsaturated, and nitrogen-comprising adhesion monomers [monomers D] |
| 0% - 5% by weight | of other ethylenically unsaturated monomers E, |

the sum of monomer compositions I + II + III being in each case 100%.

2. The aqueous polymer dispersion according to claim 1 wherein the weight-average particle diameter is ≤ 60 nm.

3. The aqueous polymer dispersion according to claim 1 or 2 wherein the amount of emulsifier used in the polymerization of stage 1 is < 2 parts by weight per 100 parts by weight of the total amount of monomers.

4. The aqueous polymer dispersion according to any of claims 1 to 3, wherein the monomers A are selected from the group of ethyl acrylate, n-propyl acrylate, n-butyl acrylate, isobutyl acrylate, sec-butyl acrylate, n-hexyl acrylate, 2-ethylhexyl acrylate, n-hexyl methacrylate, 2-ethylhexyl methacrylate or 2-propylheptyl acrylate.

5. The aqueous polymer dispersion according to any of claims 1 to 4, wherein the monomers B have a glass transition temperature of > 50°C.

6. The aqueous polymer dispersion according to any of claims 1 to 5, wherein the minimum film-forming temperature of the polymer dispersion is in the range from 0 to 20°C.

7. A process for preparing an aqueous polymer dispersion obtainable through first the preparation of an "in situ" seed, comprising hydrophilic and hydrophobic monomers, by first introducing, in an aqueous polymerization medium, only

| | |
|---|---|
| 0.1% to 10% by weight | of the total amount of the at least one monomer A and/or B and also |
| 0.1% to 10% by weight | of a hydrophilic monomer having the general formula |

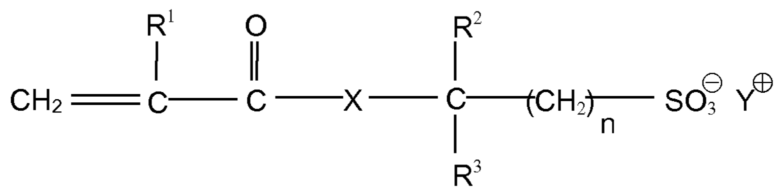

in which the variables have the following definition:

n = 0 to 2
$R^1$, $R^2$, $R^3$ = independently of one another hydrogen or a methyl group
X = oxygen or the imino group (NH), and
Y = hydrogen, alkali metal or ammonium

(monomer composition I), and carrying out polymerization in the presence of at least one emulsifier and a free-radical initiator (polymerization stage 1),
thereupon polymerizing a copolymer having a monomer composition II (polymerization stage 2) comprising

| | |
|---|---|
| 40%- 60% by weight | of monomers A whose homopolymers possess a glass transition temperature below 20°C |
| 15% - 30% by weight | of monomers B whose homopolymers possess a glass transition temperature above 50°C |
| 0.1% - 5% by weight | of α,β-unsaturated carboxylic, sulfonic, phosphonic acids and/or carboxamides copolymerizable with monomers B [monomers C] |
| 0% - 5% by weight | of ethylenically unsaturated monomers comprising keto groups, and/or non-C, ethylenically unsaturated, and nitrogen-comprising adhesion monomers [monomers D] |
| 0% - 5% by weight | of other ethylenically unsaturated monomers E |

and, in a third polymerization stage, polymerizing a copolymer having a monomer composition III, comprising

| | |
|---|---|
| 0% - 5% by weight | of monomers A whose homopolymers possess a glass transition temperature below 20°C |
| 10% - 30 by weight | of monomers B whose homopolymers possess a glass transition temperature above 50°C |
| 0.1% - 5% by weight | of α,β-unsaturated carboxylic, sulfonic or phosphonic acids and/or carboxamides copolymerizable with monomers B [monomers C] |

(continued)

| | |
|---|---|
| 0% - 5% by weight | of ethylenically unsaturated monomers comprising keto groups, and/or non-C, ethylenically unsaturated, and nitrogen-comprising adhesion monomers [monomers D] |
| 0% - 5% by weight | of other ethylenically unsaturated monomers E, |

the sum of monomer compositions I + II + III being in each case 100%, which comprises, in the aqueous polymerization medium in polymerization stage 1, introducing first only 0.1% to 10% by weight of the total amount of the at least one monomer A and/or B and carrying out polymerization, and subsequently in polymerization stages 2 and 3, adding the remainders of the at least one monomer A and the at least one monomer B to the aqueous polymerization medium under polymerization conditions and carrying out polymerization.

**8.** The process according to claim 7, wherein at least a portion of the dispersants is included in the initial charge in the aqueous polymerization medium together with the portion of the monomers A and/or B and also of the compound of the general formula I, in polymerization stage 1, and any remainder is metered into the aqueous polymerization medium in polymerization stages 2 and 3, discontinuously, in one or more portions, or continuously with constant or varying volume flows, more particularly as a constituent of an aqueous monomer emulsion comprising the total amount of monomers A and the remainders of monomers B.

**9.** The process according to claim 7 or 8, wherein the amount of dispersant, particularly of the emulsifiers, in polymerization stage 1 is selected such that it is ≥ 2 mmol per 10 g of monomers A and/or B.

**10.** A coating material in the form of an aqueous composition comprising

- at least one inventive polymer dispersion according to any of claims 1 to 6,
- optionally, at least one inorganic filler and/or at least one inorganic pigment,
- optionally, at least one typical auxiliary, and
- water.

**11.** The coating material according to claim 10, wherein said coating material is a paint.

**12.** The coating material according to claim 10, wherein said coating material is a clear varnish.

**13.** The coating material according to any of claims 10 to 12, wherein the coating material is a paint for wood coatings.

**14.** The use of the aqueous polymer dispersion according to any of claims 1 to 6 as a binder for producing a coating material.

**15.** The use of the aqueous polymer dispersion according to any of claims 1 to 6 as a binder for producing a paint for wood coatings.

**16.** The use of the aqueous polymer dispersion prepared by the process of any of claims 7 to 9 as a binder for producing a coating material.

**17.** The use of the aqueous polymer dispersion prepared by the process of any of claims 7 to 9 as a binder for producing a paint for wood coatings.

## Revendications

**1.** Dispersions aqueuses de polymères pouvant être obtenues par tout d'abord la fabrication d'un germe « in situ » contenant des monomères hydrophiles et hydrophobes, par chargement dans un milieu de polymérisation aqueux tout d'abord d'uniquement 0,1 à 10 % en poids de la quantité totale du ou des monomères A et/ou B, et
0,1 à 10 % en poids d'un monomère hydrophile de formule générale

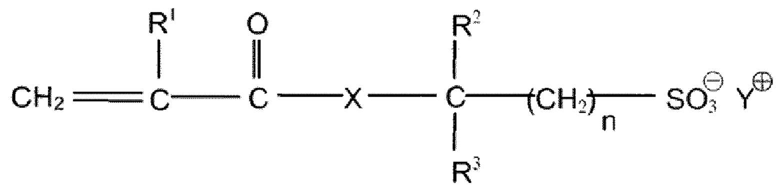

dans laquelle les variables ont la signification suivante :

n = 0 à 2,
$R^1$, $R^2$, $R^3$ = indépendamment les uns des autres hydrogène ou un groupe méthyle,
X = oxygène ou le groupe imino (NH) et
Y = hydrogène, métal alcalin ou ammonium,

(composition de monomères I) et polymérisation en présence d'au moins un émulsifiant et d'un initiateur radicalaire (étape de polymérisation 1),
puis polymérisation d'un copolymère présentant une composition de monomères II (étape de polymérisation 2) contenant
40 à 60 % en poids de monomères A, dont les homopolymères présentent une température de transition vitreuse inférieure à 20 °C,
15 à 30 % en poids de monomères B, dont les homopolymères présentent une température de transition vitreuse supérieure à 50 °C,
0,1 à 5 % en poids d'acides carboxyliques, sulfoniques, phosphoniques et/ou d'amides d'acides carboxyliques $\alpha$, $\beta$-insaturés copolymérisables avec les monomères B [monomères C],
0 à 5 % en poids de monomères éthyléniquement insaturés contenant des groupes céto et/ou de monomères adhésifs différents de C, éthyléniquement insaturés et contenant de l'azote [monomères D],
0 à 5 % en poids d'autres monomères éthyléniquement insaturés E
et, lors d'une troisième étape de polymérisation, d'un copolymère présentant une composition de monomères III, contenant
0 à 5 % en poids de monomères A, dont les homopolymères présentent une température de transition vitreuse inférieure à 20 °C,
10 à 30 % en poids de monomères B, dont les homopolymères présentent une température de transition vitreuse supérieure à 50 °C,
0,1 à 5 % en poids d'acides carboxyliques, sulfoniques ou phosphoniques et/ou d'amides d'acides carboxyliques $\alpha$,$\beta$-insaturés copolymérisables avec les monomères B [monomères C],
0 à 5 % en poids de monomères éthyléniquement insaturés contenant des groupes céto et/ou de monomères adhésifs différents de C, éthyléniquement insaturés et contenant de l'azote [monomères D],
0 à 5 % en poids d'autres monomères éthyléniquement insaturés E,
la somme des compositions de monomères I + II + III étant à chaque fois de 100 %.

2. Dispersion aqueuse de polymères selon la revendication 1, **caractérisée en ce que** le diamètre de particule moyen en poids est $\leq$ 60 nm.

3. Dispersion aqueuse de polymères selon la revendication 1 ou 2, **caractérisée en ce que** la quantité d'émulsifiant utilisée lors de la polymérisation à l'étape 1 est < 2 parties en poids pour 100 parties en poids de la quantité totale de monomères.

4. Dispersion aqueuse de polymères selon l'une quelconque des revendications 1 à 3, **caractérisée en ce que** les monomères A sont choisis dans le groupe constitué par l'acrylate d'éthyle, l'acrylate de n-propyle, l'acrylate de n-butyle, l'acrylate d'isobutyle, l'acrylate de sec-butyle, l'acrylate de n-hexyle, l'acrylate de 2-éthylhexyle, le méthacrylate de n-hexyle, le méthacrylate de 2-éthylhexyle ou l'acrylate de 2-propylheptyle.

5. Dispersion aqueuse de polymères selon l'une quelconque des revendications 1 à 4, **caractérisée en ce que** les monomères B présentent une température de transition vitreuse > 50 °C.

6. Dispersion aqueuse de polymères selon l'une quelconque des revendications 1 à 5, **caractérisée en ce que** la température minimale de formation d'un film de la dispersion de polymères se situe dans la plage allant de 0 à 20 °C.

**7.** Procédé de fabrication d'une dispersion aqueuse de polymères pouvant être obtenue par tout d'abord la fabrication d'un germe « in situ » contenant des monomères hydrophiles et hydrophobes, par chargement dans un milieu de polymérisation aqueux tout d'abord d'uniquement
0,1 à 10 % en poids de la quantité totale du ou des monomères A et/ou B, et
0,1 à 10 % en poids d'un monomère hydrophile de formule générale

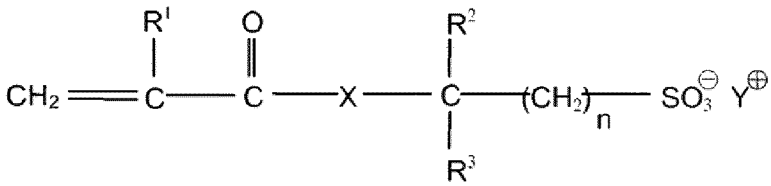

dans laquelle les variables ont la signification suivante :

n = 0 à 2,
$R^1$, $R^2$, $R^3$ = indépendamment les uns des autres hydrogène ou un groupe méthyle,
X = oxygène ou le groupe imino (NH) et
Y = hydrogène, métal alcalin ou ammonium,

(composition de monomères I) et polymérisation en présence d'au moins un émulsifiant et d'un initiateur radicalaire (étape de polymérisation 1),
puis polymérisation d'un copolymère présentant une composition de monomères II (étape de polymérisation 2) contenant
40 à 60 % en poids de monomères A, dont les homopolymères présentent une température de transition vitreuse inférieure à 20 °C,
15 à 30 % en poids de monomères B, dont les homopolymères présentent une température de transition vitreuse supérieure à 50 °C,
0,1 à 5 % en poids d'acides carboxyliques, sulfoniques, phosphoniques et/ou d'amides d'acides carboxyliques $\alpha$, $\beta$-insaturés copolymérisables avec les monomères B [monomères C],
0 à 5 % en poids de monomères éthyléniquement insaturés contenant des groupes céto et/ou de monomères adhésifs différents de C, éthyléniquement insaturés et contenant de l'azote [monomères D],
0 à 5 % en poids d'autres monomères éthyléniquement insaturés E
et, lors d'une troisième étape de polymérisation, d'un copolymère présentant une composition de monomères III, contenant
0 à 5 % en poids de monomères A, dont les homopolymères présentent une température de transition vitreuse inférieure à 20 °C,
10 à 30 % en poids de monomères B, dont les homopolymères présentent une température de transition vitreuse supérieure à 50 °C,
0,1 à 5 % en poids d'acides carboxyliques, sulfoniques ou phosphoniques et/ou d'amides d'acides carboxyliques $\alpha$,$\beta$-insaturés copolymérisables avec les monomères B [monomères C],
0 à 5 % en poids de monomères éthyléniquement insaturés contenant des groupes céto et/ou de monomères adhésifs différents de C, éthyléniquement insaturés et contenant de l'azote [monomères D],
0 à 5 % en poids d'autres monomères éthyléniquement insaturés E,
la somme des compositions de monomères I + II + III étant à chaque fois de 100 %, **caractérisé en ce que** tout d'abord uniquement 0,1 à 10 % en poids de la quantité totale du ou des monomères A et/ou B est chargée dans le milieu de polymérisation aqueux à l'étape de polymérisation 1 et polymérisée, puis, aux étapes de polymérisation 2 et 3, les quantités restantes du ou des monomères A et du ou des monomères B sont ajoutées au milieu de polymérisation aqueux dans des conditions de polymérisation et polymérisées.

**8.** Procédé selon la revendication 7, **caractérisé en ce qu'**au moins une partie de l'agent de dispersion est chargée dans le milieu de polymérisation aqueux avec la partie des monomères A et/ou B, ainsi que le composé de formule générale I, à l'étape de polymérisation 1, et la quantité éventuellement restante est ajoutée au milieu de polymérisation aqueux aux étapes de polymérisation 2 et 3 de manière discontinue, en une ou plusieurs portions, ou de manière continue en des débits constants ou variables, notamment en tant que constituant d'une émulsion aqueuse de monomères, contenant la quantité totale des monomères A et les quantités restantes des monomères B.

**9.** Procédé selon la revendication 7 ou 8, **caractérisé en ce qu'**à l'étape de polymérisation 1, la quantité d'agent de

dispersion, notamment des émulsifiants, est choisie de manière à être ≥ 2 mmol pour 10 g des monomères A et/ou B.

**10.** Agent de revêtement sous la forme d'une composition aqueuse, contenant :

- au moins une dispersion de polymères selon l'invention selon l'une quelconque des revendications 1 à 6,
- éventuellement au moins une charge inorganique et/ou au moins un pigment inorganique,
- éventuellement au moins un adjuvant usuel et
- de l'eau.

**11.** Agent de revêtement selon la revendication 10, **caractérisé en ce que** l'agent de revêtement est une peinture.

**12.** Agent de revêtement selon la revendication 10, **caractérisé en ce que** l'agent de revêtement est une laque transparente.

**13.** Agent de revêtement selon l'une quelconque des revendications 10 à 12, **caractérisé en ce que** l'agent de revêtement est une peinture pour revêtements de bois.

**14.** Utilisation de la dispersion aqueuse de polymères selon l'une quelconque des revendications 1 à 6 en tant que liant pour la fabrication d'agents de revêtement.

**15.** Utilisation de la dispersion aqueuse de polymères selon l'une quelconque des revendications 1 à 6 en tant que liant pour la fabrication de peintures pour revêtements de bois.

**16.** Utilisation de la dispersion aqueuse de polymères fabriquée par le procédé selon l'une quelconque des revendications 7 à 9 en tant que liant pour la fabrication d'agents de revêtement.

**17.** Utilisation de la dispersion aqueuse de polymères fabriquée par le procédé selon l'une quelconque des revendications 7 à 9 en tant que liant pour la fabrication de peintures pour revêtements de bois.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 0710680 B
- DE 19609509 A
- EP 690882 A
- EP 710680 A
- EP 1125949 A
- EP 1294816 A
- EP 1614732 A
- WO 0329300 A
- US 4269749 A
- EP 771328 A
- DE 19624299 A
- DE 19621027 A
- DE 19741184 A
- DE 19741187 A
- DE 19805122 A
- DE 19828183 A
- DE 19839199 A
- DE 19840586 A
- DE 19847115 A


### In der Beschreibung aufgeführte Nicht-Patentliteratur


- *Kolloid-Zeitschrift & Zeitschrift für Polymere,* vol. 190, 1
- **T.G. FOX.** *Bull. Am. Phys. Soc.,* 1956, vol. 1, 123
- Ullmann's Encyclopädie der technischen Chemie. Verlag Chemie, 1980, vol. 19, 18
- Ullmann's Ecyclopedia of Industrial Chemistry. VCH, vol. 5, 169
- **J. BRANDRUP ; E.H. IMMERGUT.** Polymer Handbook. J. Wiley, 1966
- POLYMER HANDBOOK. J.Wiley, 1975
- POLYMER HANDBOOK. J. Wiley, 1989
- Methoden der organischen Chemie. **HOUBEN-WEYL.** Makromolekulare Stoffe. Georg-Thieme-Verlag, 1961, vol. XIV/1, 411-420
- Methoden der organischen Chemie. **HOUBEN-WEYL.** Makromolekulare Stoffe. Georg-Thieme-Verlag, 1961, vol. XIV/1, 192-208
- **H. STACHE.** Tensid-Taschenbuch. Carl-Hanser-Verlag, 1981
- McCutcheon's, Emulsifiers & Detergents. MC Publishing Company, 1989
- **J. BRANDRUP ; E.H. IMMERGUT.** Polymerhandbook. John Wiley & Sons, 1989, 133-141
- **S.E. HARDING et al.** Analytical Ultracentrifugation in Biochemistry and Polymer Science. Royal Society of Chemistry, 1992
- **W. MÄCHTLE.** *Analysis of Polymer Dispersions with an Eight-Cell-AUC-Multiplexer: High Resolution Particle Size Distribution and Density Gradient Techniques,* 147-175
- Ullmanns Enzyklopädie der technischen Chemie. Verlag Chemie, 1980, vol. 19, 17